# EUROPÄISCHE PATENTSCHRIFT

(11) **EP 3 668 922 B1**
(45) Veröffentlichungstag und Bekanntmachung des Hinweises auf die Patenterteilung: **16.03.2022**
(21) Anmeldenummer: 18749834.0
(22) Anmeldetag: 13.08.2018
(51) Int. Cl.: C08L 15/00

(54) **VULKANISIERBARE ZUSAMMENSETZUNGEN ENTHALTEND HYDRIERTEN NITRILKAUTSCHUK, DARAUS HERGESTELLTE VULKANISATE UND DEREN VERWENDUNG**
VULCANISABLE COMPOSITIONS CONTAINING HYDROGENATED NITRILE RUBBER, VULCANIZATES PREPARED FROM SAME AND THEIR USE
COMPOSITIONS VULCANISABLES CONTENANT UN CAOUTCHOUC NITRILE HYDROGÉNÉ, VULCANISATS FABRIQUÉS À PARTIR DE TELLES COMPOSITIONS ET LEUR UTILISATION

(30) Priorität: 16.08.2017 EP 17186346
(43) Veröffentlichungstag der Anmeldung: 24.06.2020
(73) Patentinhaber: ARLANXEO Deutschland GmbH, 41540 Dormagen (DE)
(72) Erfinder: FRENZEL, Ulrich, 41542 Dormagen (DE); LIEBER, Susanna, 67663 Kaiserslautern (DE)
(86) Internationale Anmeldenummer: PCT/EP2018/071855
(87) Internationale Veröffentlichungsnummer: WO 2019/034572

(56) Entgegenhaltungen:
- EP-A1- 2 957 424
- DE-A1-102005 062 075
- DE-A1-102007 020 451
- DE-A1-102008 033 267

## Beschreibung

Die vorliegende Erfindung betrifft die Verwendung einer **vulkanisierbaren Zusammensetzungen** enthaltend **hydrierten Nitrilkautschuk, nicht-silanisierten mineralischen Füllstoff,** weniger als 20 phr Ruß und einen peroxidischen Vernetzer zur Herstellung von Vulkanisaten, die in Kontakt mit Blow-By-Gas, AGR-Gas oder Motoröl, enthaltend Blow-By-Gas-Bestandteilen, stehen. Die Erfindung betrifft außerdem die **Herstellung** solcher vulkanisierbarer Zusammensetzungen, ferner **Vulkanisate,** die daraus hergestellt werden und deren **Verwendung** als Formteile die in Kontakt mit sauren Medien stehen, die sowohl organische als auch anorganische Säuren enthalten, bevorzugt Dichtungen, Riemen, und Schläuchen die in Kontakt mit Blow-By- oder AGR-Gas bzw. deren Kondensat stehen.

Bei Hubkolbenverbrennungsmotoren fällt im Kurbelgehäuse ein ölhaltiges, aggressives Leckagegas, das sog. **Blow-By-Gas,** an. Genauer gesagt sind Blow-By-Gase eine Mischung aus Abgasen, Öl, nicht verbranntem Kraftstoff und Wasser. Ihre Zurückführung in den Verbrennungsprozess ist weltweit gesetzlich vorgeschrieben und erfolgt in sogenannten geschlossenen Kurbelgehäuseentlüftungssystemen. Hierbei werden häufig Gummibauteile, wie z. B. Schläuche oder Dichtungen, aus HNBR- oder FKM-basierenden Vulkanisaten verwendet.

Die im Blow-By-Gas bzw. seinem Kondensat enthaltenen **organischen und anorganischen Säuren, Öle** und Kraftstoffrückstände führen zur Quellung und Alterung der verwendeten HNBR-Vulkanisate, wodurch die ordnungsgemäße Funktion der daraus hergestellten Gummibauteile nicht mehr gewährleistet ist.

Ähnliches passiert bei der Rückführung von Abgas in den Brennraum, dem sog. AGR (Abgasrückführung; engl. EGR, Exhaust Gas Recirculation). Auch hier sind die Gummibauteile **starken Belastungen** durch die in den rückgeführten Abgasen bzw. deren Kondensaten enthaltenen Kraftstoffrückstände, sowie organischen und anorganischen Säuren ausgesetzt.

Die Eigenschaften eines HNBR-Vulkanisats hängen von der Wechselwirkung der Bestandteile der vulkanisierbaren Zusammensetzung ab. Neben dem hydrierten Nitrilkautschuk als Grundbestandteil sind vor allem die weiteren Füllstoffe entscheidend. Die meisten HNBRhaltigen Zusammensetzungen enthalten **Ruße,** da diese eine hervorragende und gezielt einstellbare Verstärkungswirkung und konstante Produkteigenschaften besitzen, vor schädlichen UV-Strahlen schützen und zudem relativ kostengünstig sind und somit den Preis des Gummibauteils reduzieren.

Daneben sind HNBR-haltige Zusammensetzungen bekannt, die mineralische Füllstoffe wie Silikate und Oxide enthalten. Es ist unter anderem aus EP-A-1 357 156 bekannt, oxidische oder silikatische Verbindungen mit Organosiliziumverbindungen zu behandeln, d.h. zu silanisieren, um durch diese Behandlung den Verbund zwischen anorganischem Füllstoff und dem verwendeten organischen Polymer in füllstoffverstärkten Elastomeren zu stärken und damit die Eigenschaften der Füllstoffe in den Polymeren zu verbessern.

Aus dem Stand der Technik sind eine Reihe an HNBR-basierten vulkanisierbaren Zusammensetzungen und deren Vulkanisaten bekannt.

In EP-A-3 100 780 wird in Abschnitt [0029] als Dichtelement des Ventilschließkörpers eines Kurbelgehäuseentlüftungs-Systems, welches in Kontakt mit Blow-By-Gas steht, neben anderen Elastomeren HNBR als möglicher Werkstoff verwendet. Weitere Angaben zur Zusammensetzung des Dichtelements sind nicht offenbart.

DE102008033267A1 offenbart Vulkanisate aus vulkanisierbaren Zusammensetzungen enthaltend 100 Gew.-Teile hydrierten Nitrilkautschuk, 6 Gew.-Teile Zinkoxid, 15 Gew.-Teile Kieselsäure, 15 Gew.-Teile Ruß und 7 Gew.-Teile einer Peroxidverbindung. Zusammensetzungen mit hohen Anteilen an nicht silanisierten mineralischen Füllstoffen von 40 bis 200 Gew.-Teilen sind nicht offenbart.

DE102005062075A1 offenbart Vulkanisate aus vulkanisierbaren Zusammensetzungen enthaltend 100 Gew.-Teile hydrierten Nitrilkautschuk, 2 Gew.-Teilen Zinkoxid, 60 Gew.-Teilen Ruß und 8 Gew-Teilen einer Peroxidverbindung. Zusammensetzungen mit hohen Anteilen an nicht silanisierten mineralischen Füllstoffen von 40 bis 200 Gew.-Teilen sowie geringen Mengen Ruß von weniger als 20 Gew.-Teilen sind nicht offenbart. Die zum Zeitpunkt der Anmeldung unveröffentlichte Patentanmeldung PCT/EP2017/051238 der Anmelderin offenbart vulkanisierbare Zusammensetzungen enthaltend HNBR, Ruß oder silanisierten mineralischen Füllstoff und Peroxid als Vernetzer. Die explizit offenbarten Zusammensetzungen 1 und 3 weisen hohe Mengen Ruß (N990) auf. Die Zusammensetzungen 2 und 4 weisen ein Silanisierungsmittel (Silquest) auf. Die Verwendung der aus diesen Zusammensetzungen hergestellten Vulkanisate für Bauteile, insbesondere Dichtungen, die in Kontakt mit Blow-By-Gasen stehen ist nicht offenbart.

In der Broschüre "**Helle Füllstoffe in HNBR (peroxidvernetzt)"** der Firma Hoffmann Mineral (veröffentlicht 2008) werden Zusammensetzungen enthaltend HNBR, silanisierten mineralischen Füllstoff (Aktisil VM 56, d.h. ein Kieselsäure-Kaolinit-Gemisch mit Vinylsilan silanisiert) oder 50 bzw. 100 phr Ruß und Peroxid sowie 50 phr Natriumaluminiumsilikat offenbart.

In der Produktbroschüre "Introduction to Therban" von Bayer, Abschnitt 4.13 (veröffentlich 2000) werden Zusammensetzungen enthaltend HNBR mit 39 Gew.-% Acrylnitril (ACN), geringe Mengen von weniger als 70 Gew.-Teilen an nicht-silanisierten mineralischen Füllstoffen wie Vulkasil N, Hi-Sil 532EP, Silene 732D und Peroxid offenbart. WO-A-2010/030747 offenbart Zusammensetzungen enthaltend HNBR, mineralischen Füllstoff (HI-SIL^{®} 532 EP; HYCITE^{®} 713) und Silanisierungsmittel (STRUKTOL^{®} SCA 972)

Den Dokumenten des Standes der Technik ist allen gemein, dass vulkanisierbare Zusammensetzungen von **hydrierten Nitrilkautschuken** mit einer Kombination aus **nicht silanisiertem mineralischem Füllstoff, weniger als 20 phr Ruß** und **Peroxid,** zur Herstellung von Vulkanisaten im Kontakt mit **Blow-By-Gas, AGR-Gas** oder **Motoröl, enthaltend Blow-By-Gas-Bestandteilen** nicht offenbart sind.

Die im Stand der Technik offenbarten Vulkanisate sind nicht befriedigend hinsichtlich der Volumenquellung der Vulkanisate im Kontakt mit Mischungen aus anorganischen und organischen Säuren wie beispielsweise Schwefelsäure, Salpetersäure, Essigsäure oder Ameisensäure, wie sie im Blow-By-Gas vorliegen können.

Die Aufgabe der vorliegenden Erfindung war es daher, vulkanisierbare Zusammensetzungen und deren Vulkanisate auf Basis hydrierter Nitrilkautschuke zur Verwendung im Kontakt mit Blow-By-Gas, AGR-Gas oder Motoröl, enthaltend Blow-By-Gas-Bestandteilen bereitzustellen, wobei die Vulkanisate eine verbesserte Beständigkeit gegenüber Blow-By-Gas oder AGR-Gas, d.h. eine **verringerte Volumenquellung** bei Alterung in Zusammensetzungen enthaltend Kraftstoffrückstände, organische und anorganische Säuren, aufweisen und/oder die Vulkanisate eine **hohe Bruchdehnung** aufweisen.

Es wurde nun überraschenderweise gefunden, dass Zusammensetzungen mit einem hydrierten Nitrilkautschuk, einem **nicht silanisierten mineralischen Füllstoff,** beispielsweise **Polestar^{®} 200R** oder **Silfit^{®} Z91** und geringen Mengen an Ruß von weniger als 20 phr nach **peroxidischer** Vernetzung zu Vulkanisaten führen, die, im Vergleich zu den HNBR-basierten Vulkanisaten des Standes der Technik, eine verbesserte Beständigkeit gegenüber Gemischen von organischen und anorganischen Säuren und insbesondere Blow-By-Gas aufweisen und somit für die Verwendung in Kontakt mit Blow-By-Gas, AGR-Gas oder Motoröl, enthaltend Blow-By-Gas-Bestandteilen, geeignet sind.

**Gegenstand der Erfindung** ist daher die Verwendung einer vulkanisierbaren Zusammensetzung zur Herstellung eines Vulkanisats, das mit Blow-By-Gas, AGR-Gas oder Motoröl, enthaltend Blow-By-Gas-Bestandteilen, in Kontakt steht, wobei die vulkanisierbare Zusammensetzung
(a) 100 Gew.-Teile mindestens eines hydrierten Nitrilkautschuks, welcher einen **Gehalt an Restdoppelbindungen (RDB)** von 10 % oder weniger aufweist,
(b) 40 bis 200 Gew.-Teile, bevorzugt 50 bis 150 Gew.-Teile, besonders bevorzugt 70 bis 120 Gew.-Teile mindestens eines nicht silanisierten mineralischen Füllstoffs,
(c) 0 bis weniger als 20 Gew.-Teile Ruß, bevorzugt 0 bis weniger als 10 Gew.-Teile Ruß, besonders bevorzugt 0 bis 5 Gew.-Teile Ruß, ganz besonders bevorzugt 0 Gew.-Teile Ruß, und
(d) 0,5 bis 20 Gew.-Teile mindestens einer Peroxidverbindung enthält.

Dieses Eigenschaftsprofil ist bei Einsatz der bisher bekannten vulkanisierbaren Zusammensetzungen hydrierter Nitrilkautschuke, die entweder Ruß in einer Menge von 20 phr oder mehr und / oder silanisierte mineralische Füllstoffe enthalten, nicht möglich.

Die Verwendung vulkanisierbarer Zusammensetzungen ist **bevorzugt,** welche
(a) 100 Gew.-Teile mindestens eines hydrierten Nitrilkautschuk, welcher einen **Gehalt an Restdoppelbindungen (RDB)** von 10 % oder weniger aufweist,
(b) 40 bis 200 Gew.-Teile, bevorzugt 50 bis 150 Gew.-Teile, besonders bevorzugt 70 bis 120 Gew.-Teile mindestens eines nicht silanisierten, mineralischen **silikatischen oder oxidischen** Füllstoff,
(c) 0 bis weniger als 20 Gew.-Teile Ruß, bevorzugt 0 bis 10 Gew.-Teile Ruß, besonders bevorzugt 0 bis 5 Gew.-Teile Ruß,
(d) 0,5 bis 20 Gew.-Teile, bevorzugt 2 bis 10 Gew.-Teile mindestens einer Peroxidverbindung und
(e) 0 bis 15 Gew.-Teile, bevorzugt 1 bis 10 Gew.-Teile, besonders bevorzugt 2 bis 7 Gew.-Teile **basisches Silikat** mit einem pH Wert in Wasser (5 Gew.-% in Wasser) gemessen nach DIN ISO 787/9 größer 7 enthalten.

Die Verwendung vulkanisierbarer Zusammensetzungen ist **besonders bevorzugt,** welche
(a) 100 Gew.-Teile mindestens eines hydrierten Nitrilkautschuks, welcher einen **Gehalt an Restdoppelbindungen (RDB)** von 10 % oder weniger aufweist,
(b) 40 bis 200 Gew.-Teile, bevorzugt 50 bis 150 Gew.-Teile, besonders bevorzugt 70 bis 120 Gew.-Teile **gefällte Kieselsäure, pyrogene Kieselsäure, Kaolin, kalzinierten Kaolin, Diatomeenerde, Neuburger Kieselerde, kalzinierte Neuburger Kieselerde, Feldspat, Aluminiumoxid oder Mischungen davon,**
(c) 0 bis weniger als 20 Gew.-Teile Ruß, bevorzugt 0 bis 10 Gew.-Teile Ruß, besonders bevorzugt 0 bis 5 Gew.-Teile Ruß,
(d) 0,5 bis 20 Gew.-Teile, bevorzugt 2 bis 10 Gew.-Teile mindestens einer Peroxidverbindung und
(e) 0 bis 15 Gew.-Teile, bevorzugt 1 bis 10 Gew.-Teile, besonders bevorzugt 2 bis 7 Gew.-Teile basisches Silikat mit einem pH Wert in Wasser (5 Gew.-% in Wasser) gemessen nach DIN ISO 787/9 größer 7 enthalten.

Die Verwendung vulkanisierbarer Zusammensetzungen ist **ganz besonders bevorzugt,** welche
(a) 100 Gew.-Teile mindestens eines **hydrierten Nitrilkautschuks,** welcher einen **Gehalt an Restdoppelbindungen (RDB)** von 10 % oder weniger aufweist,
(b) 40 bis 200 Gew.-Teile, bevorzugt 50 bis 150 Gew.-Teile, besonders bevorzugt 70 bis 120 Gew.-Teile nicht silanisiertes **kalziniertes Kaolin** enthaltend 50 bis 60 Gew.-%, bevorzugt 55 Gew.-% SiO₂ und 35 bis 45 Gew.-%, bevorzugt 41 Gew.-% Al₂O₃ bezogen auf die Gesamtmenge an Komponente (b)
(c) 0 bis 5 Gew.-Teile Ruß,
(d) 0,5 bis 20 Gew.-Teile, bevorzugt 2 bis 10 Gew.-Teile mindestens einer **Peroxidverbindung,** besonders bevorzugt Dicumylperoxid, tert-Butylcumylperoxid, Bis(tert-butylperoxyisopropyl)benzol, Di-tert-butylperoxid, 2,5-Dimethylhexan-2,5-dihydroperoxid, 2,5-Dimethylhexin-3,2,5-di-hydroperoxid oder Dibenzoylperoxid und
(e) 1 bis 10 Gew.-Teile, bevorzugt 2 bis 7 Gew.-Teile **Natriumaluminiumsilikat** mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15 enthalten.

Die erfindungsgemäßen vulkanisierbaren Zusammensetzungen zeichnen sich dadurch aus, dass die daraus hergestellten Vulkanisate eine **geringe Volumenquellung** in Kontakt mit Blow-By-Gasen aufweisen und eine **höhere Bruchdehnung** im Vergleich zu Vulkanisaten enthaltend 20 phr oder mehr Ruß oder silanisierten mineralischen Füllstoff.

Die erfindungsgemäße vulkanisierbare Zusammensetzung enthält als **Komponente (a)** mindestens einen **hydrierten Nitrilkautschuk** welcher einen **Gehalt an Restdoppelbindungen (RDB)** von 10 % oder weniger aufweist.

### Hydrierte Nitrilkautschuke:

Unter hydrierten Nitrilkautschuken (HNBR) sind im Rahmen dieser Anmeldung Co- und/oder Terpolymere auf der Basis mindestens eines konjugierten Diens und mindestens eines α,β-ungesättigten Nitrils sowie gegebenenfalls weiterer copolymerisierbarer Monomeren zu verstehen, bei denen die einpolymerisierten Dieneinheiten ganz oder teilweise hydriert sind. Unter "Hydrierung" oder "hydriert" wird im Rahmen dieser Anmeldung eine Umsetzung der im Nitrilkautschuk ursprünglich vorhandenen Doppelbindungen zu mindestens 50 %, bevorzugt mindestens 85 %, besonders bevorzugt mindestens 95 % verstanden, wobei der erfindungsgemäß verwendete Nitrilkautschuk einen **Gehalt an Restdoppelbindungen (RDB)** von 10 % oder weniger aufweist.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Die Anteile an konjugiertem Dien und α,β-ungesättigtem Nitril in den hydrierten Nitrilkautschuken können in weiten Bereichen variiert werden. Der Anteil des oder der Summe der konjugierten Diene liegt üblicherweise im Bereich von 40 bis 90 Gew.-% und bevorzugt im Bereich von 50 bis 80 Gew.-%, bezogen auf das Gesamtpolymer. Der Anteil des oder der Summe der α,β-ungesättigten Nitrile liegt üblicherweise im Bereich von 10 bis 60 Gew.-% und bevorzugt im Bereich von 20 bis 50 Gew.-%, bezogen auf das Gesamtpolymer. Die zusätzlichen Monomere können in Mengen im Bereich von 0,1 bis 40 Gew.-%, bevorzugt im Bereich von 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

In einer bevorzugten Ausführungsform beträgt der **Gehalt an Acrylnitrilwiederholungseinheiten** im hydrierten Nitrilkautschuk (a) in der erfindungsgemäßen vulkanisierbaren Zusammensetzung bei 10 bis 50 Gew.-%, bevorzugt 17 bis 43 Gew.-% und besonders bevorzugt 20 bis 36 Gew.-% bezogen auf die Gesamtmenge an hydriertem Nitrilkautschuk (a).

Die Herstellung solcher hydrierter Nitrilkautschuke, die für die erfindungsgemäßen vulkanisierbaren Zusammensetzungen geeignet sind, ist dem Fachmann hinlänglich geläufig.

Die zunächst erfolgende Herstellung der Nitrilkautschuke durch Copolymerisation der vorgenannten Monomere ist in der Literatur (z.B. Houben-Weyl, Methoden der Organischen Chemie Bd.14/1, Georg Thieme Verlag Stuttgart 1961) umfangreich beschrieben.

Die anschließende Hydrierung der vorstehend beschriebenen Nitrilkautschuke zu hydriertem Nitrilkautschuk kann in der dem Fachmann bekannten Art und Weise erfolgen.

Es ist prinzipiell möglich, die Hydrierung von Nitrilkautschuken unter Einsatz homogener oder heterogener Hydrierkatalysatoren durchzuführen.

Wie in WO-A-01/77185 beschrieben ist es beispielsweise möglich, die Umsetzung mit Wasserstoff unter Einsatz homogener Katalysatoren, wie z.B. dem als "Wilkinson"-Katalysator ((PPh₃)₃RhCl) bekannten oder anderen durchzuführen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B. US-A-3,700,637, DE-A-25 39 132, EP-A-134 023, DE-OS-35 41 689, DE-OS-35 40 918, EP-A-298 386, DE-OS-35 29 252, DE-OS-34 33 392, US-A-4,464,515 und US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt Die selektive Hydrierung kann beispielsweise in Gegenwart eines Rhodium-haltigen Katalysators erreicht werden. Einsetzbar ist beispielsweise ein Katalysator der allgemeinen Formel

(R¹mB)ₗ RhXn

worin
- R¹: gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen,
- B: Phosphor, Arsen, Schwefel oder eine Sulfoxid-Gruppe S=O bedeutet,
- X: Wasserstoff oder ein Anion, vorzugsweise Halogen und besonders bevorzugt Chlor oder Brom, bedeutet
- I: 2,3 oder 4 ist
- m: 2 oder 3 ist und
- n: 1,2 oder 3, bevorzugt 1 oder 3 ist.

Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis-(triphenylphosphin)-rhodium-hydrid der Formel ((C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01 bis 1 Gew.-%, bevorzugt im Bereich von 0,03 bis 0,5 Gew.-% und besonders bevorzugt im Bereich von 0,1 bis 0,3 Gew.-% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl-, Tricycloalkyl-, Triaryl-, Triaralkyl-, Diarylmonoalkyl-, Diarylmonocycloalkyl-, Dialkylmonoaryl-, Dialkyl-monocycloalkyl-, Dicycloalkylmonoaryl- oder Dicyclalkylmonoaryl-Resten.

Beispiele für Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3 bis 5 Gew.-%, besonders bevorzugt im Bereich von 0,5 bis 4 Gew.-%, bezogen auf das Gewicht des zu hydrierenden Nitrilkautschuks eingesetzt. Bevorzugt ist ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gew.-Teile des zu hydrierenden Nitrilkautschuks werden geeigneter Weise 0,1 bis 33 Gew.-Teile des Co-Katalysators, bevorzugt 0,5 bis 20 und ganz besonders bevorzugt 1 bis 5 Gew.-Teile, insbesondere mehr als 2 aber weniger als 5 Gew.-Teile Co-Katalysators bezogen auf 100 Gew.-Teile des zu hydrierenden Nitrilkautschuks eingesetzt.

Die praktische Durchführung solcher Hydrierungen ist dem Fachmann z.B. aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 °C bis 150 °C und einem Druck im Bereich von 50 bar bis 150 bar für 2 Stunden bis 10 Stunden mit Wasserstoff beaufschlagt.

Bei Einsatz heterogener Katalysatoren zur Herstellung hydrierter carboxylierter Nitrilkautschuke durch Hydrierung der entsprechenden carboxylierten Nitrilkautschuke handelt es sich üblicherweise um geträgerte Katalysatoren auf der Basis von Palladium.

In einer alternativen Ausführungsform der Erfindung liegt die **Mooney-Viskosität** (ML 1+4 gemessen bei 100 °C) des eingesetzten hydrierten Nitrilkautschuks (a) oder, sofern mehrere hydrierte Nitrilkautschuke (a) eingesetzt werden, der gesamten Mischung aller hydrierten Nitrilkautschuke (a) typischerweise in einem Bereich von 10 bis 120, bevorzugt in einem Bereich von 15 bis 100. Die Bestimmung der Mooney-Viskosität erfolgt dabei gemäß ASTM Norm D 1646.

In einer alternativen Ausführungsform der Erfindung weist der erfindungsgemäße hydrierte Nitrilkautschuk typischerweise einen **Gehalt an Restdoppelbindungen (RDB)** von 7 % oder weniger, besonders bevorzugt von 0,9 % oder weniger auf.

In einer alternativen Ausführungsform der Erfindung besitzen die in der erfindungsgemäßen vulkanisierbaren Zusammensetzung einsetzbaren hydrierten Nitrilkautschuke typischerweise eine **Glastemperatur** kleiner -15 °C, bevorzugt kleiner -20 °C, besonders bevorzugt kleiner - 25 °C.

Derartige hydrierte Nitrilkautschuke (a) sind teilweise kommerziell erhältlich, aber ferner in allen Fällen nach dem Fachmann über die Literatur zugängliche Herstellverfahren zugänglich. Beispiele für hydrierte Nitrilkautschuke sind voll- und teilhydrierte Nitrilkautschuke mit Acrylnitrilgehalten im Bereich 20 bis 50 Gew.-% (Therban^{®}-Palette der LANXESS Deutschland GmbH sowie die Zetpol^{®}-Palette der Nippon Zeon Corporation oder die Zhanbe^{®}-Palette von Zannan). Beispiele für hydrierte Butadien/Acrylnitril/Acrylat-Polymere ist die Therban^{®} LT-Serie der LANXESS Deutschland GmbH, beispielsweise Therban^{®} LT 2157 sowie Therban^{®} LT 2007. Ein Beispiel für carboxylierte hydrierte Nitrilkautschuke ist die Therban^{®} XT-Serie der LANXESS Deutschland GmbH. Beispiele für hydrierte Nitrilkautschuke mit geringen Mooney-Viskositäten und daher verbesserter Verarbeitbarkeit ist ein Produkt aus der Therban^{®} AT-Serie, beispielweise Therban^{®} AT 3404.

Der **hydrierte Nitrilkautschuk** kann neben Wiederholungseinheiten mindestens eines ungesättigten Nitrils und mindestens eines konjugierten Diens ein oder mehrere weitere einpolymerisierbare Monomere in Form von **Carbonsäuren** oder **Carbonsäureestern** enthalten. Es handelt sich dann dabei um **hydrierte carboxylierte Nitrilkautschuke** (auch als HXNBR abgekürzt).

Geeignete einpolymerisierbare Carbonsäuren sind Mono- oder Dicarbonsäuren mit 3 bis 18 C-Atomen, die in α,β-Position ungesättigt sind, und deren Ester. Bevorzugte α,β-ungesättigte Carbonsäuren sind Acrylsäure, Methacrylsäure, Itaconsäure, Fumarsäure, Maleinsäure, Crotonsäure und Mischungen davon.

Ester der α,β-ungesättigten Carbonsäuren mit 3 bis 18 C-Atomen umfassen vorzugsweise die Alkylester und die Alkoxyalkylester der zuvor genannten Carbonsäuren. Bevorzugte Ester der α,β-ungesättigten Carbonsäuren mit 3 bis 18 C-Atomen sind Methylacrylat, Ethylacrylat, Butylacrylat, 2-Ethylhexylacrylat und Octylacrylat, C₁-C₈-Alkoxy-PEG-(Meth)acrylat mit 1 bis 8 Ethylenglycol-Wiederholungseinheiten. Bevorzugte Alkoxyalkylester sind Methoxyethylacrylat, und Ethoxyethylacrylat sowie Mischungen derselben.

Bevorzugte Ester sind α,β-ethylenisch ungesättigte Dicarbonsäure Monoestern wie beispielsweise
∘ Alkyl-, insbesondere C₄-C₁₈-Alkyl-, bevorzugt n-Butyl-, tert.-Butyl-, n-Pentyl- oder n-Hexyl-, besonders bevorzugt Mono-n-butylmaleat, Mono-n-butylfumarat, Mono-n-butylcitraconat, Mono-n-butylitaconat;
∘ Alkoxyalkyl-, insbesondere C₄-C₁₈-Alkoxyallkyl-, bevorzugt C₄-C₁₂-Alkoxyalkyl-, ∘ Hydroxyalkyl-, insbesondere C₄-C₁₈-Hydroxyalkyl-, bevorzugt C₄-C₁₂-Hydroxyalkyl-,
∘ Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
∘ Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexylitaconat;
∘ Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat oder Mischungen davon,
∘ ungesättigte Polycarboxylsäurepolyalkylester wie beispielsweise Dimethylmaleat, Dimethylfumarat, Dimethylitaconate oder Diethylitaconate; oder
∘ aminogruppenhaltige α,β-ethyienisch ungesättigte Carboxylsäureester wie beispielsweise Dimethylaminomethylacrylat oder Diethylaminoethylacrylat

Die Anteile an konjugiertem Dien und α,β-ungesättigtem Nitril in den HXNBR-Polymeren können in weiten Bereichen schwanken. Der Anteil des oderderSumme der konjugierten Diene liegt üblicherweise im Bereich von 15 bis 90 Gew.-% und bevorzugt im Bereich von 40 bis 75 Gew.-%, bezogen auf das Gesamtpolymer. Der Anteil des oder der Summe der α,β-ungesättigten Nitrile liegt üblicherweise bei 0,1 bis 60 Gew.-%, bevorzugt bei 8 bis 50 Gew.-%, bezogen auf das Gesamtpolymer. Die zusätzlichen Monomere liegen in Mengen von 0,1 bis 65 Gew.-%, bevorzugt 15 bis 50 Gew.-%, bezogen auf das Gesamtpolymer, vor. Die Anteile aller Monomere summieren sich jeweils zu 100 Gew.-% auf.

Es handelt sich somit bei den **hydrierten carboxylierten Nitrilkautschuken** um einen hydrierten carboxylierten Nitrilkautschuk HXNBR auf der Basis mindestens eines ungesättigten Nitrils, mindestens eines konjugierten Diens und mindestens eines Carboxyl- und/oder Carboxylat-Gruppen enthaltenden weiteren Termonomeren, wobei mindestens 50 % der ursprünglich im XNBR vorhandenen Doppelbindungen gesättigt sind.

Als **HXNBR** geeignet sind beispielsweise hydrierte carboxylierte Nitrilkautschuke auf der Basis eines XNBR aus Butadien und Acrylnitril und Acrylsäure und/oder Methacrylsäure und/oder Fumarsäure und/oder Maleinsäure und/oder den Methyl-, Ethyl-, Propyl-, Isopropyl-, n-Butyl, iso-Butyl-, n-Hexyl- und/oder 2-Ethylhexyl-Halbestern von Fumarsäure und/oder Maleinsäure und/oder den Methyl-, Ethyl-, Propyl-, Isopropyl-, n-Butyl-, iso-Butyl-, n-Hexyl- und/oder 2-Ethylhexyl-Estern von Acrylsäure und/oder Methacrylsäure.

**Hydrierte carboxylierte Nitrilkautschuke** sind auf verschiedenen Wegen zugänglich:
Möglich ist es beispielsweise, ein HNBR mit Carboxylgruppen-haltigen Verbindungen zu pfropfen.

Sie können ferner durch Hydrierung von **carboxylierten Nitrilkautschuke (XNBR)** erhalten werden. Derartige hydrierte carboxylierte Nitrilkautschuke sind beispielsweise in WO-A-01/77185 beschrieben.

Neben dem mindestens einen hydrierten Nitrilkautschuk (a), können daneben auch weitere Elastomere enthalten sein. Weitere Elastomere liegen in einem Gewichtsverhältnis von 1:5 bis 5:1 zu den hydrierten Nitrilkautschuken vor. In einer bevorzugten Ausführungsform liegen neben dem hydrierten Nitrilkautschuk (a) keine weiteren Elastomere vor.

### Komponente (b) - nicht silanisierter mineralischer Füllstoff

Bei der Komponente (b) der erfindungsgemäßen vulkanisierbaren Zusammensetzung handelt es sich um einen **nicht silanisierten mineralischen Füllstoff.**

Unter dem Begriff **"silanisiert"** versteht der Fachmann die chemische Anbindung einer Silanverbindung an eine Oberfläche. Die Anbindung erfolgt durch Kondensationsreaktionen zwischen hydrolysierbaren Gruppen der verwendeten Silane und chemischen Gruppen an der Füllstoff-Oberfläche.

Unter dem Begriff **"mineralischer Füllstoff"** versteht der Fachmann sogenannte helle, mineralische Stoffe, die aus natürlicher Herkunft stammen, wie beispielsweise Silikate, Oxide, Hydroxide oder Kaolin, oder durch bestimmte Verfahren synthetisiert werden, wie beispielsweise Kieselsäure.

**Bevorzugte** nicht silanisierte mineralische Füllstoffe (b) sind nicht silanisierte, mineralische, **silikatische** oder **oxidische** Füllstoffe.

Als nicht silanisierter, mineralischer **silikatischer** Füllstoff kann Silikat, Kaolin, Mica, Kieselgur, Diatomeenerde, Talkum, Wollastonit, Aluminiumsilikat, Zeolith, gefällte Kieselsäure oder Clay oder auch Silikate unter anderem in Form von Glaskugeln, gemahlenen Glassplittern (Glasmehl), Glasfasern oder Glasgeweben verwendet werden.

Als nicht silanisierter, mineralischer **oxidischer** Füllstoff kann Aluminiumoxid, Übergangsmetalloxide, Zirconiumdioxid oder Titandioxid, verwendet werden.

Die Zugabe von hohen Mengen an ZnO führt jedoch zu einer unerwünschten Zunahme der Härte, welche die Anwendungsbereiche der Vulkanisate verringern.

In einer bevorzugten Ausführungsform der erfindungsgemäßen vulkanisierbaren Zusammensetzung beträgt der Anteil an ZnO am nicht silanisierten mineralischen Füllstoff maximal 20 Gew.-Teile, bevorzugt maximal 10 Gew.-Teile und ganz besonders bevorzugt maximal 5 Gew.-Teile bezogen auf 100 Gew.-Teile HNBR. In einer besonders bevorzugten Ausführungsform weist die erfindungsgemäße vulkanisierbare Zusammensetzung kein ZnO auf.

Die Silikate können auch als Mischoxide mit anderen Metalloxiden wie beispielsweise Oxiden von Ca, Ba, Zn, Zr oder Ti vorliegen.

**Besonders bevorzugte** nicht silanisierte, mineralische Füllstoffe (b) im Sinne dieser Erfindung sind gefällte Kieselsäure, pyrogene Kieselsäure, Kaolin, kalzinierter Kaolin, Diatomeenerde, Neuburger Kieselerde (Sillitin^{®}, Sillikolloid^{®}), kalzinierte Neuburger Kieselerde (Silfit^{®}), Feldspat oder Aluminiumoxid.

**Ganz besonders bevorzugte** nicht silanisierte mineralische Füllstoffe (b) sind **kalzinierte Kaoline** mit einer spezifischen Oberfläche (N₂-Oberfläche) kleiner 10 m²/g enthaltend mindestens 40 Gew.-% Silikat (SiO₂) und mindestens 10 Gew.-% Aluminiumoxid (Al₂O₃) bezogen auf die Gesamtmenge an Komponente (b) oder Gemische aus amorpher und kryptokristalliner Kieselsäure und lamellaren Kaolinit mit einer BET-Oberfläche von 8 m²/g, einen Gehalt an SiO₂ von 86 Gew.-%, einen Gehalt an Al₂O₃ von 13 Gew.-% bezogen auf die Gesamtmenge an nicht silanisiertem Füllstoff (b) und einen pH-Wert von 6,5.

Die hier in der Beschreibung angegebenen Werte für die spezifische Oberfläche der Füllstoffe sind BET-Werte, also Werte gemessen nach DIN-ISO 9277.

Ein Beispiel für einen bevorzugten nicht silanisierten, mineralischen, **silikatischen** Füllstoff (b) ist das **SILFIT^{®} Z 91** (kommerziell erhältlich bei der Firma Hoffmann Mineral). SILFIT Z 91 ist ein in der Natur entstandenes Gemisch aus amorpher und kryptokristalliner Kieselsäure und lamellarem Kaolinit, das einerthermischen Behandlung unterzogen wurde. SILFIT Z 91 hat eine BET-Oberfläche von 8 m²/g, einen Gehalt an SiO₂ von 86 Gew.-%, einen Gehalt an Al₂O₃ von 13 Gew.-% und einen pH-Wert von 6,5.

In einer weiteren bevorzugten Ausführungsform handelt es sich bei dem nicht silanisierten, mineralischen, **silikatischen** Füllstoff (b) um eine hydrophile pyrogene Kieselsäure enthaltend >99,8 Gew.-% SiO₂ mit einer spezifischen Oberfläche (BET) von 175 bis 225 m²/g und einem pH Wert von 4,1±0,4, wie z.B. **Aerosil^{®} 200** (kommerziell erhältlich bei Evonik Industries).

In einer weiteren bevorzugten Ausführungsform handelt es sich bei dem nicht silanisierten, mineralischen, **silikatischen** Füllstoff (b) um eine gefällte Kieselsäure, wie z.B. **Vulkasil^{®} N** (kommerziell erhältlich bei LANXESS Deutschland GmbH).

In einer weiteren bevorzugten Ausführungsform handelt es sich dem nicht silanisierten, mineralischen, **silikatischen** Füllstoff (b) um amorphes Silika bestehend aus kugelförmigen Siliziumdioxidpartikeln, die über eine Gasphasenkondesation hergestellt werden, wie z.B. **Sidistar^{®}** (kommerziell erhältlich bei Elkem AS).

In einer weiteren bevorzugten Ausführungsform handelt es sich bei dem nicht silanisierten, mineralischen, **silikatischen** Füllstoff (b) um Diatomeenerde oder kalzinierte Diatomeenerde, wie z.B. **Celite^{®} 350.**

Weiter bevorzugt handelt es sich bei der Komponente (b) um **kalziniertes Kaolin,** enthaltend 40 bis 70 Gew.-% SiO₂ und 30 bis 60 Gew.-% Al₂O₃, mit einem pH Wert von 6,0 bis 7,0±0,5 und einer Oberfläche (BET) von 8 bis 9 m²/g.

Besonders bevorzugt handelt es sich bei der Komponente (b) um **kalziniertes Kaolin** enthaltend 50 bis 60 Gew.-% SiO₂, 35 bis 45 Gew.-% Al₂O₃ mit einem pH Wert von 6,4 bis 6,6±0,5 und einer Oberfläche (BET) von 8,3 bis 8,7 m²/g.

Ganz besonders bevorzugt handelt es sich bei der Komponente (b) um kalziniertes Kaolin enthaltend 50 bis 60 Gew.-%, bevorzugt 55 Gew.-% SiO₂ und 35 bis 45 Gew.-%, bevorzugt 41 Gew.-% Al₂O₃ mit einem pH Wert von 6,5±0,5 und einer Oberfläche (BET) von 8,5 m²/g. Ein Beispiel für eine ganz besonders bevorzugte Komponente (b) ist das kalzinierte Kaolin Polestar^{®} 200R (kommerziell erhältlich bei der Firma Imerys). Polestar^{®} 200R wird hergestellt durch Erhitzen von zermahlenem Kaolin auf Temperaturen über 1000 °C.

Ebenfalls bevorzugt sind Gemische der hier aufgeführten bevorzugten Komponenten (b).

Die Komponente (b) liegt in den erfindungsgemäßen vulkanisierbaren Zusammensetzungen in einer Menge von 40 bis 200 Gew.-Teilen, bevorzugt in einer Menge von 50 bis 150 Gew.-Teile, besonders bevorzugt 70 bis 120 Gew.-Teile bezogen auf 100 Gew.-Teile der hydrierten Nitrilkautschuke (a), vor.

### Komponente (c) - Ruß

Die erfindungsgemäßen Zusammensetzungen enthalten weniger als 20 phr Ruß. Als Komponente (c) können daher nur 0 bis weniger als 20 phr Ruß als Füllstoff eingesetzt werden. Bevorzugt werden 0 bis 10 phr, besonders bevorzugt 0 bis 5 phr Ruß, ganz besonders bevorzugt 0 phr Ruß als Füllstoff eingesetzt.

Erfindungsgemäße Zusammensetzungen ohne Ruß sind somit am meisten bevorzugt.

### Komponente (d) - Peroxidverbindung

Als **Komponente (d)** wird mindestens eine Peroxidverbindung als Vernetzungsmittel eingesetzt.

Als Peroxidverbindung (d) sind beispielsweise die folgenden **Peroxidverbindungen** geeignet:
Bis-(2,4-dichlorbenzoyl)-peroxid, Dibenzoylperoxid, Bis-(4-chlorbenzoyl)peroxid, 1,1-Bis-(tert-butylperoxy)-3,3,5-trimethylcyclohexan, tert-Butylperbenzoat, 2,2-Bis-(tert-butylperoxy)-buten, 4,4-Di-tert-butylperoxynonylvalerat, Dicumylperoxid, 2,5-Dimethyl-2,5-di-(tert-butylperoxy)-hexan, tert-Butylcumylperoxid, 1,3-Bis-(tert-butylperoxyisopropyl)-benzol, Di-tert-butylperoxid, 2,5-Dimethyl-2,5-di(tert-butylperoxy)-hexin, tert-Butylhydroperoxid, Wasserstoffperoxid, Methylethylketonperoxid, Lauroylperoxid, Decanoylperoxid, 3,5,5-Trimethyl-hexanoyl-peroxid, Di-(2-ethylhexyl)-peroxydicarbonat, Poly(tert-butyl peroxycarbonat), Ethyl-3,3-di-(tert-butylperoxy)-butyrat, Ethyl-3,3-di-(tert-amylperoxy)-butyrat, n-Butyl-4,4-di-(tert-butylperoxy)-valerat, 2,2-Di-(tert-butylperoxy)-butan, 1,1-Di-(tert-butylperoxy)-cyclohexan, 3,3,5-Trimethylcyclohexan, 1,1-Di-(tert-amylperoxy)cyclohexan, tert-Butyl-peroxybenzoat, tert-Butyl-peroxyacetat, tert-Butyl-peroxy-3,5,5-trimethylhexanoat, tert-Butyl peroxyisobutyrat, tert-Butyl-peroxy-2-ethylhexanoat, tert-Butyl-peroxypivalat, tert-Amyl-peroxypivalat, tert-Butylperoxyneodecanoat, Cumyl-peroxyneodecanoat, 3-Hydroxy-1,1-di-methylbutyl-peroxyneodecanoat, tert-Butyl-peroxybenzoat, tert-Butyl-peroxyacetat, tert-Amyl-peroxy-3,5,5-trimethylhexanoat, tert-Butyl-peroxyisobutyrat, tert-Butyl-peroxy-2-ethylhexanoat, Cumyl-peroxyneodecanoat, 3-Hydroxy-1,1-di-methylbutyl-peroxy-neodecanoat, 2,5-Dimethyl-2,5-di-(tert-butyl-peroxy)-hexyn-(3-di-tert-amyl)-peroxid, 2,5-Dimethyl-2,5-di-(tert-butylperoxy)-hexan, tert-Amyl-hydroperoxid, Cumolhydroperoxid, 2,5-Dimethyl-2,5-di-(hydroperoxy)-hexan, Diisopropylbenzol-monohydroperoxid sowie Kaliumperoxodisulfat.

Die mindestens eine Peroxidverbindung (d) der erfindungsgemäßen vulkanisierbaren Zusammensetzung ist vorzugsweise ein organisches Peroxid, insbesondere Dicumylperoxid, tert-Butylcumylperoxid, Bis-(tert-butyl-peroxy-isopropyl)benzol, Di-tert-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, tert-Butylperbenzoat, 4,4-Di(tert-butylperoxy)valeriansäurebutylester und/oder 1,1-Bis(tert-butylperoxy)-3,3,5-trimethylcyclohexan.

Die Peroxidverbindung (d) liegt in den erfindungsgemäßen vulkanisierbaren Zusammensetzungen bevorzugt in einer Menge von 0,5 bis 20 Gew.-Teilen, besonders bevorzugt in einer Menge von 2 bis 10 Gew.-Teilen, bezogen auf 100 Gew.-Teile der hydrierten Nitrilkautschuke (a), vor.

### Komponente (e) - basisches Silikat

Die erfindungsgemäße vulkanisierbare Zusammensetzung kann optional ein basisches Silikat (e) enthalten.

Im Rahmen dieser Erfindung steht der Begriff "basisches Silikat" für Silikate die gemessen in einer 5 Gew.-%igen wässrigen Lösung nach DIN ISO 787/9 einen pH-Wert von mehr als 7 aufweisen.

Bei der Komponente (e) handelt es sich um ein basisches Silikat mit einem pH-Wert von mehr als 7, bevorzugt mit einem pH-Wert von mehr als 8, besonders bevorzugt mit einem pH-Wert von mehr als 8 bis 12, und ganz besonders bevorzugt mit einem pH-Wert von 10,5 bis 12, gemessen in einer 5 Gew.-%igen wässrigen Lösung nach DIN ISO 787/9. Ein Beispiel für basische Silikate mit einem pH-Wert von mehr als 7 ist Natriumaluminiumsilikat, erhältlich unter dem Markennamen **Vulkasil^{®} A1** von LANXESS.

Bevorzugt handelt es sich bei der Komponente (e) um ein basisches Silikat mit einem pH-Wert von mehr als 8 aus der Gruppe bestehend aus Natriumaluminiumsilikat und Natriumorthosilikat (Na₄SiO₄), Natriummetasilikat (Na₂SiO₃), Dinatriumdisilikat (Na₂Si₂O₅), Dinatriumtrisilikat (Na₂Si₃O₇) besonders bevorzugt Natriumaluminiumsilikat.

Besonders bevorzugt handelt es sich bei der Komponente (e) um ein **Natriumaluminiumsilikat.**

Ein Beispiel für eine besonders bevorzugte Komponente (e) ist das Natriumaluminiumsilikat mit dem Markennamen **Zeolex^{®} 23** (kommerziell erhältlich bei der Firma Huber) mit einem pH Wert von 10 und einer Oberfläche (BET) von 80.

Ganz besonders bevorzugt handelt es sich bei der Komponente (e) um Natriumaluminiumsilikat mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15. Ein Beispiel für eine ganz besonders bevorzugte Komponente (e) ist das Natriumaluminiumsilikat mit dem Markennamen **Vulkasil^{®} A1** (kommerziell erhältlich bei LANXESS Deutschland GmbH).

Die Komponente (e) liegt in den erfindungsgemäßen vulkanisierbaren Zusammensetzungen in einer Menge von 0 bis 15 Gew.-Teilen, bevorzugt in einer Menge von 1 bis 10 Gew.-Teilen, bezogen auf 100 Gew.-Teile der hydrierten Nitrilkautschuke (a), vor.

Darüber hinaus kann die vulkanisierbare Zusammensetzung weitere Kautschukadditive enthalten. Übliche Kautschukadditive schließen beispielsweise ein: Polymere, die nicht unter die erfindungsgemäße Definition der Komponente (a) fallen, Füllstoffaktivatoren, Weichmacher, Verarbeitungshilfsmittel, Beschleuniger, Coagentien, multifunktionelle Vernetzer, Alterungsschutzmittel, Ozonschutzmittel, Antioxidationsmittel, Formtrennmittel, Anvulkanisationshemmer, weitere Stabilisatoren und Antioxidantien, Farbstoffe, Fasern umfassend organische und anorganische Fasern sowie Faserpulpe, Vulkanisationsaktivatoren, und zusätzliche polymerisierbare Monomere, Dimere, Trimere oder Oligomere.

Als **Füllstoffaktivatoren** kommen insbesondere nicht-silanische grenzflächenaktive Substanzen wie Triethanolamin oder Ethylenglycole mit Molekulargewichten von 74 bis 10.000 g/mol dar. Die Menge an Füllstoffaktivatoren beträgt üblicherweise 0,5 bis 10 Gew.-Teile, bezogen auf 100 Gew.-Teile der hydrierten Nitrilkautschuke (a).

Als **Weichmacher** kommen aromatische, naphthenische, paraffinische und synthetische Weichmacher in Frage, wie beispielsweise Thioester, Phthalsäureester, aromatische Polyether, Phosphorsäureester wie Trikresylphosphat, Sebacinsäureester wie Dioctylsebacat, niedrigmolekulare, polymere Polyester, Dioctyladipat oder Trioctyltrimellitat. Solche Weichmacher werden typischerweise in Dosierungen von 0 bis 20 phr eingesetzt. Kombinationen verschiedener Weichmacher sind ebenfalls möglich.

Als **Alterungsschutzmittel** kommen insbesondere solche in Frage, die bei der peroxidischen Vulkanisation möglichst wenig Radikale abfangen. Dies sind insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiamin. Es können auch Kombinationen der genannten Alterungsschutzmittel eingesetzt werden.

Die **Alterungsschutzmittel** werden üblicherweise in Mengen von 0,1 bis 5 Gew.-Teile, bevorzugt von 0,3 bis 3 Gew.-Teile, bezogen auf 100 Gew.-Teile der hydrierten Nitrilkautschuke (a) verwendet. Besonders bevorzugt werden Diphenylamine in einer Dosierung von 1 bis 2 phr eingesetzt.

Als **Formtrennmittel** kommen beispielsweise in Betracht: Gesättigte oder teilweise ungesättigte Fett- und Ölsäuren oder deren Derivate (in Form von Fettsäureestern, Fettsäuresalzen, Fettalkoholen oder Fettsäureamiden), weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden z.B. als Mischungsbestandteil in Mengen von 0,2 bis 10 Gew.-Teile, bevorzugt 0,5 bis 5 Gew.-Teile, bezogen auf 100 Gew.-Teile der hydrierten Nitrilkautschuke (a) eingesetzt oder direkt auf die Formoberfläche aufgebracht.

Auch die Verstärkung der Vulkanisate mit Festigkeitsträgern aus Glas nach der Lehre von US-A-4,826,721 ist möglich sowie die Verstärkung mit aromatischen Polyamiden (Aramid^{®}). Dies ist insbesondere beim Einsatz der erfindungsgemäßen vulkanisierbaren Mischung in Riemen nötig.

**Ein bevorzugter Gegenstand der Erfindung** ist ferner die Verwendung einer vulkanisierbaren Zusammensetzung zur Herstellung eines Vulkanisats, das mit Blow-By-Gas, AGR-Gas oder Motoröl, enthaltend Blow-By-Gas-Bestandteilen, in Kontakt steht, wobei die vulkanisierbare Zusammensetzung
(a) 100 Gew.-Teile mindestens eines **hydrierten Nitrilkautschuks,** welcher einen **Gehalt an Restdoppelbindungen (RDB)** von 10 % oder weniger aufweist
(b) 40 bis 200 Gew.-Teile, bevorzugt 50 bis 150 Gew.-Teile, besonders bevorzugt 70 bis 120 Gew.-Teile mindestens eines **nicht silanisierten mineralischen Füllstoffs,**
(c) 0 bis 5 Gew.-Teile Ruß,
(d) 0,5 bis 20 Gew.-Teile, bevorzugt 2 bis 10 Gew.-Teile mindestens einer **Peroxidverbindung,** bevorzugt Dicumylperoxid, tert-Butylcumylperoxid, Bis-(tert-butyl-peroxy-isopropyl)benzol, Di-tert-butylperoxid, 2,5-Dimethylhexan-2,5-dihydroperoxid, 2,5-Dimethylhexin-3,2,5-di-hydroperoxid oder Dibenzoylperoxid,
(e) 0 bis 15 Gew.-Teile, bevorzugt 1 bis 10 Gew.-Teile mindestens eines **basischen Silikats** und,
(f) 0 bis 200 Gew.-Teile, bevorzugt 1 bis 100 Gew.-Teile mindestens eines üblichen **Kautschukadditivs.**

**Ein weiterer bevorzugter Gegenstand der Erfindung** ist ferner die Verwendung einer vulkanisierbaren Zusammensetzung zur Herstellung eines Vulkanisats, das mit Blow-By-Gas, AGR-Gas oder Motoröl, enthaltend Blow-By-Gas-Bestandteilen, in Kontakt steht, wobei die vulkanisierbare Zusammensetzung
(a) 100 Gew.-Teile mindestens eines **hydrierten Nitrilkautschuks,** welcher einen **Gehalt an Restdoppelbindungen (RDB)** von 10 % oder weniger aufweist
(b) 40 bis 200 Gew.-Teile mindestens eines **kalzinierten Kaolins** enthaltend 50 bis 60 Gew.-%, bevorzugt 55 Gew.-% SiO₂ und 35 bis 45 Gew.-%, bevorzugt 41 Gew.-% Al₂O₃ bezogen auf die Gesamtmenge an Komponente (b) mit einem pH Wert in Wasser (5 Gew.-% in Wasser) gemessen nach DIN ISO 787/9 von 6,5±0,5 und einer Oberfläche (BET) gemessen nach ISO 9277 von 8,5 m²/g oder eines **Gemisches** aus amorpher und kryptokristalliner Kieselsäure und lamellaren Kaolinit mit einer BET-Oberfläche von 8 m²/g, einen Gehalt an SiO₂ von 86 Gew.-%, einen Gehalt an Al₂O₃ von 13 Gew.-% bezogen auf die Gesamtmenge an Komponente (b) und einen pH-Wert von 6,5,
(c) 0 bis 5 Gew.-Teile Ruß,
(d) 1 bis 10 Gew.-Teile mindestens einer **Peroxidverbindung,** bevorzugt Dicumylperoxid, tert-Butylcumylperoxid, Bis(tert-butylperoxyisopropyl)benzol, Di-tert-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, tert-Butylperbenzoat, 4,4-Di(tert-butylperoxy)valeriansäurebutylester oder 1,1-Bis(tert-butylperoxy)-3,3,5-trimethylcyclohexan,
(e) 1 bis 10 Gew.-Teile mindestens eines **Natriumaluminiumsilikats** mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15 und,
(f) 1 bis 100 Gew.-Teile mindestens eines üblichen **Kautschukadditivs.**

**Gegenstand der Erfindung** ist ferner ein **Verfahren zur Herstellung** der vorgenannten erfindungsgemäßen vulkanisierbaren Zusammensetzungen, indem man alle Komponenten (a), (b), ggf. (c), (d), ggf. (e) und ggf. (f) mischt. Dies kann unter Einsatz von dem Fachmann bekannten Vorrichtungen und Mischapparaturen erfolgen.

Die Reihenfolge, in der die Komponenten miteinander gemischt werden, ist nicht von grundlegender Bedeutung, sondern wird jeweils abgestimmt auf die zur Verfügung stehenden Mischaggregate.

Die Mischung der Komponenten (a), (b), ggf. (c), (d), ggf. (e) und ggf. (f) kann dabei, je nach Temperatur, unter Verwendung der typischen, in der Kautschukindustrie gängigen Mischsystemen erfolgen. Einsatzbar sind i) diskontinuierlich mischende Aggregate in Form von Mischwalzen oder Innenmischern sowie ii) kontinuierlich mischende Aggregate wie Mischextruder.

Besonders bewährt hat es sich, die Mischung der Komponenten (a), (b), ggf. (c), (d), ggf. (e) und ggf. (f) bei einer vorgegebenen Mischerwandtemperatur im Bereich von ca. 30 °C bis 40 °C durchzuführen, da hier mit den oben genannten, in der kautschukverarbeitenden Industrie gängigen Mischaggregaten genügend hohe Scherkräfte appliziert können, um eine gute Durchmischung zu erreichen.

Alternativ kann auch in geeigneten Aggregaten bei höheren Temperaturen gemischt werden. Im Einzelfall kann es notwendig sein, zunächst die Komponenten (a), (b), ggf. (c), ggf. (e) und ggf. (f) zu mischen und die Peroxidverbindung (d) erst ganz zum Schluss zuzumischen. Dies kann zum Beispiel im Mischaggregat im Endstück einer Düse unmittelbar vor dem Austreten der Mischung auf das Substrat / in die Form geschehen.

In der Praxis erhält man nach dem Mischen der erfindungsgemäßen Komponenten die vulkanisierbare Zusammensetzungen z.B. in Form sogenannter "Felle", Fütterstreifen oder Fütterkörper, oder auch als Pellets oder Granulate. Dies können anschließend in Formen gepresst oder spritzgegossen werden und werden entsprechend den eingesetzten Peroxidverbindungen bei geeigneten Bedingungen vernetzt.

**Gegenstand der Erfindung** ist ferner ein **Verfahren zur Herstellung von Vulkanisaten,** indem man die erfindungsgemäße vulkanisierbaren Zusammensetzung der zuvor genannten Art einer Vulkanisation, d.h. einem Energieeintrag, insbesondere einer Temperaturbehandlung, unterwirft.

Der Energieeintrag kann in Form von thermischer Energie oder Strahlungsenergie erfolgen, je nachdem welcher Typ der Peroxidverbindung (d) in der vulkanisierbaren Zusammensetzung gewählt wird.

Die Herstellung der vulkanisierten Erzeugnissen mittels Temperaturbehandlung wird durchgeführt, indem man die erfindungsgemäßen vulkanisierbaren Zusammensetzungen in üblicher Weise in geeigneten Formwerkzeugen einer Temperatur im Bereich von bevorzugt 120 °C bis 200 °C, besonders bevorzugt von 140 °C bis 190 °C aussetzt.

Im Rahmen der Vernetzung der erfindungsgemäßen vulkanisierbare Zusammensetzung führt die Peroxidverbindung (d) zu einer radikalischen Vernetzung zwischen und mit dem eingesetzten hydrierten Nitrilkautschuk (a).

Gegenstand der Erfindung sind somit auch **Verfahren zur Herstellung eines Vulkanisats,** das mit Blow-By-Gasen in Kontakt steht, umfassend den Schritt der Vulkanisation einer vulkanisierbaren Zusammensetzung, dadurch gekennzeichnet, dass die vulkanisierbare Zusammensetzung
(a) 100 Gew.-Teile mindestens eines hydrierten Nitrilkautschuks, welcher einen **Gehalt an Restdoppelbindungen (RDB)** von 10 % oder weniger aufweist
(b) 40 bis 200 Gew.-Teile, bevorzugt 50 bis 150 Gew.-Teile, besonders bevorzugt 70 bis 120 Gew.-Teile mindestens eines nicht silanisierten mineralischen Füllstoffs,
(c) 0 bis weniger als 20 Gew.-Teile Ruß, bevorzugt 0 bis weniger als 10 Gew.-Teile Ruß, besonders bevorzugt 0 bis 5 Gew.-Teile Ruß, und
(d) 0,5 bis 20 Gew.-Teile mindestens einer Peroxidverbindung und
(e) 0 bis 15 Gew.-Teile mindestens eines basischen Silikats, bevorzugt Natriumaluminiumsilikats enthält.

**Gegenstand der Erfindung** sind ferner auch **Vulkanisate,** die durch Vernetzung, d.h. Vulkanisation, der erfindungsgemäßen vulkanisierbaren Zusammensetzungen erhältlich sind.

**Gegenstand der Erfindung** ist ferner die **Verwendung** der **Vulkanisate,** hergestellt aus einer erfindungsgemäßen vulkanisierbaren Zusammensetzung, zur Herstellung eines Bauteils, wobei zumindest das Vulkanisat in Kontakt mit Blow-By-Gas oder AGR-Gas oder Motoröl, enthaltend Blow-By-Gas-Bestandteilen, steht.

**Gegenstand der Erfindung** ist insbesondere die **Verwendung** der **Vulkanisate,** hergestellt aus einer erfindungsgemäßen vulkanisierbaren Zusammensetzung, zur Herstellung eines Bauteils, wobei zumindest das Vulkanisat in Kontakt mit Blow-By-Gas oder AGR-Gas oder Motoröl, enthaltend Blow-By-Gas-Bestandteilen, steht und das Bauteil eine Dichtung, ein Riemen, ein Schlauch oder ein Kabel, bevorzugt eine Dichtung, ein Riemen oder ein Schlauch ist.

Gegenstand der Erfindung ist ferner die **Verwendung** einer der zuvor genannten Ausführungsformen der erfindungsgemäßen vulkanisierbaren Zusammensetzungen zur Herstellung eines Vulkanisats, das mit Blow-By-Gas oder AGR-Gas oder Motoröl, enthaltend Blow-By-Gas-Bestandteilen, in Kontakt steht.

### Beispiele:

### Herstellung, Vulkanisation und Charakterisierung der Kautschukzusammensetzunqen

Als primäres Mischaggregat wurde eine Mischwalze mit auf 30 °C gekühltem Walzwerk der Firma Troester vom Typ WNU3 mit Walzen eingesetzt, die einen Durchmesser von 200 mm besitzen. Hierbei wurde der hydrierte Nitrilkautschuk (a) vorgelegt und alle weiteren Komponenten in der Reihenfolge (b), dann ggf. (c), dann (e), dann alle weiteren Kautschukadditive (f) und zum Schluss die Peroxidverbindung (d) (siehe unten aufgeführte Liste der Komponenten in Tabelle 1) hinzugefügt. Die Drehzahl und Friktion der Walze wurde dabei so gesteuert, dass stabile Felle erhalten werden. Nach ca. 5 min Mischzeit war der Mischvorgang beendet und das Produkt wurde als Fell von der Walze abgezogen. Nachfolgend wurde in Plattenpressen eine Vulkanisation dieser Felle bei 180 °C für 15 min vorgenommen.

**Eingesetzte Komponenten:**
- **Therban^{®} 3406**: Hydrierter Nitrilkautschuk (HNBR), ACN-Gehalt: 34±1,0 Gew.-%, Mooney Viskosität ML 1+4 @100°C: 63±7 ME, Restdoppelbindungsgehalt: ≤0,9 %; kommerziell erhältlich von ARLANXEO Deutschland GmbH
- **Therban^{®} 3907**: Hydrierter Nitrilkautschuk (HNBR), ACN-Gehalt: 39±1,0 Gew.-%, Mooney Viskosität ML 1+4 @100 °C: 70 ME, Restdoppelbindungsgehalt: ≤0,9 %; kommerziell erhältlich von ARLANXEO Deutschland GmbH
- **Therban^{®} AT 3904 VP**: Hydrierter Nitrilkautschuk (HNBR), ACN-Gehalt: 39±1,0 Gew.-%, Mooney Viskosität ML 1+4 @100 °C: 40 ME, Restdoppelbindungsgehalt: ≤0,9 %; kommerziell erhältlich von ARLANXEO Deutschland GmbH
- **Polestar^{®} 200R**: Nicht silanisiertes, kalziniertes Kaolin, enthaltend 55 Gew.-% SiO₂, 41 Gew.-% Al₂O₃ mit einem pH Wert von 6,5±0,5 und einer Oberfläche (BET) von 8,5 m²/g; kommerziell verfügbar von Imerys
- **Silfit^{®} Z91**: Natürliches Gemisch aus nicht silanisierter, korpuskularer Kieselsäure und lamellarem Kaolinit, das einer thermischen Behandlung unterzogen wurde; kommerziell verfügbar von Hoffmann Mineral
- **Vulkasil^{®} N**: Nicht silanisierte, verstärkende gefällte Kieselsäure; kommerziell verfügbar von LANXESS Deutschland GmbH
- **Aerosil^{®} 200**: Nicht silanisierte, hydrophile, pyrogene Kieselsäure mit einer spezifischen Oberfläche (BET) von 175-225 m²/g; kommerziell verfügbar von Evonik Industries
- **ZnO aktiv**: Zinkoxid
- **Maglite^{®} DE**: Magnesiumoxid
- **Aerosil^{®} R7200**: Methacrylsilanbehandelte, strukturmodifizierte pyrogene Kieselsäure mit einer spezifischen Oberfläche (BET) von 125-175 m²/g; kommerziell verfügbar von Evonik Industries
- **Vulkasil^{®} A1**: Basisches Natriumaluminiumsilikat mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15; kommerziell verfügbar von LANXESS Deutschland GmbH
- **N550**: Ruß, Orion Engineered Carbons GmbH
- **N772**: Ruß, Orion Engineered Carbons GmbH
- **Perkadox^{®} 14-40**: Di(tert.-butylperoxyisopropyl)benzol 40% geträgert auf Kieselsäure; kommerziell verfügbar von Akzo Nobel Polymer Chemicals BV
- **Uniplex^{®} 546**: Trioctyltrimellitat (TOTM); kommerziell verfügbar von LANXESS Deutschland GmbH
- **Luvomaxx^{®} CDPA**: 4,4'-Bis-(1,1-dimethylbenzyl)-diphenylamin; kommerziell verfügbar von Lehmann und Voss
- **Vulkanox^{®} MB2**: Mischung von 4- und 5-Methyl-2-mercaptobenzthiazol; kommerziell verfügbar von LANXESS Deutschland GmbH
- **Vulkanox^{®} ZMB2/C5**: Zinksalz von 4- und 5-Methyl-2- Mercaptobenzimidazol mit einer Dichte von 1,25 g/cm3 bei 25°C der Lanxess Deutschland GmbH
- **TAIC**: Triallylisocyanurat, 70% Masterbatch; kommerziell verfügbar von Kettlitz Chemie GmbH & Co KG
- **TOTM**: Trioctyltrimellitat
- **Edenor^{®} C18**: Stearinsäure; erhältlich bei Oleo Solutions
- **Rhenofit^{®} DDA**: 70 Gew.-% Diphenylamin-Derivat (dry liquid) der LANXESS Deutschland GmbH

Alle Mengenangaben in "phr" bedeuten parts per hundred parts of rubber. Die Summe aller Elastomerkomponenten, umfassend mindestens einen hydrierten Nitrilkautschuk, entspricht 100 phr.

Die **Vernetzungsdichte** wurde mit einem Moving Die Rheometer (MDR 2000E) bestimmt, wobei mit einem Winkel von 0,5° und einer Oszillationsfrequenz von 1,7 Hz bei 180 °C für 30 Minuten gemessen wurde.

Für die **Zugprüfung** wurden 2 mm Platten durch Vulkanisation der vulkanisierbaren Mischung bei 180 °C hergestellt. Aus diesen Platten wurden die hantelförmigen Prüfkörper ausgestanzt und nach ASTM D2240-81 die Zugfestigkeit (engl. tensile strength, TS), der Modul 100 (M100) und die Bruchdehnung (engl. elongation at break, E@B) bestimmt.

Die **Härte** wurde mit einem Durometer nach ASTM D2240-81 bestimmt.

**Zusammensetzung der Säuremischung I:**

| | |
|---|---|
| Wasser (deionisiert) | 90,7 Vol.-% |
| Ameisensäure (98 %) | 0,06 Vol.-% |
| Essigsäure (99,9 %) | 0,06 Vol.-% |
| Salpetersäure (HNOs) (67,5 %) | 0,18 Vol.-% |
| Ethanol (99,8 %) | 9 Vol.-% |

**Zusammensetzung der Säuremischung II:**

| | |
|---|---|
| Formaldehyd-10% (stabilisiert mit 10 % Methanol) | 10,00 Gew.-% |
| Wasser (deionisiert) | 89,70 Gew.-% |
| Salpetersäure (HNO₃) (65 %) | 0,18 Gew.-% |
| Ameisensäure (98-100 %) | 0,06 Gew.-% |
| Essigsäure (96 %) | 0,06 Gew.-% |
| Die Herstellung erfolgt durch Mischung in der genannten Reihenfolge. | |

**Beispiele 1-8:** Alle erfindungsgemäßen Beispiele sind in den folgenden Tabellen 1 bis 5 mit einem * hinter der jeweiligen Beispielsnummer gekennzeichnet.

**Tabelle 1: Vulkanisierbare Zusammensetzungen**

| | **1** | **2** | **3** | **4*** | **5*** | **6*** | **7** | **8*** |
|---|---|---|---|---|---|---|---|---|
| **(a) Therban^{®} 3406** | 100 | 100 | 100 | 100 | 100 | 100 | 100 | 100 |
| **(b) Polestar^{®} 200R** | 100 | 100 | 100 | 100 | | 100 | 100 | 100 |
| **(b) Silfit Z91** | | | | | 100 | | | |
| **(b) Vulkasil^{®} N** | | | | | 20 | 20 | | |
| **(b) Aerosil^{®} 200** | | | | | | | | 20 |
| **Aerosil^{®} R7200** | | | | | | | 20 | |
| **(c) N550** | 40 | 30 | 20 | 10 | | | | |
| **(d) Perkadox^{®} 14-40** | 8,5 | 8,5 | 8,5 | 8,5 | 8,5 | 8,5 | 8,5 | 8,5 |
| **(e) Vulkasil^{®} A1** | 5 | 5 | 5 | 5 | 5 | 5 | 5 | 5 |
| **Uniplex 546** | 10 | 10 | 10 | 10 | 10 | 10 | 10 | 10 |
| **Luvomaxx CDPA** | 1,2 | 1,2 | 1,2 | 1,2 | 1,2 | 1,2 | 1,2 | 1,2 |
| **Vulkanox^{®} MB2** | 0,3 | 0,3 | 0,3 | 0,3 | 0,3 | 0,3 | 0,3 | 0,3 |
| **TAIC 70%** | 1,5 | 1,5 | 1,5 | 1,5 | 1,5 | 1,5 | 1,5 | 1,5 |

| | | | | | | | | |
|---|---|---|---|---|---|---|---|---|
| Alle Mengenangaben in Tabelle 1 in Gew.-Teilen. | | | | | | | | |

Die erfindungsgemäßen Zusammensetzungen 4*, 5*, 6* und 8* enthalten neben einem hydrierten Nitrilkautschuk (Komponente (a)) und einer Peroxidverbindung (Komponente (d)) sowohl einen nicht silanisierten mineralischen Füllstoff (Komponente (b)) und weniger als 20 phr Ruß (Komponente (c)).

Die Vergleichszusammensetzungen 1, 2 und 3 enthalten große Mengen an Ruß von 20 oder mehr phr.

Die Vergleichszusammensetzung 7 enthält silanisierten mineralischen Füllstoff (Aerosil^{®} R7200).

**Tabelle 2: Vulkanisationsmessung (MDR bei 180 °C)**

| | | **1** | **2** | **3** | **4*** | **5*** | **6*** | **7** | **8*** |
|---|---|---|---|---|---|---|---|---|---|
| **S' min** | **dNm** | 1,8 | 1,6 | 1,5 | 1,3 | 2,3 | 2,2 | 2,0 | 2,7 |
| **S' max** | **dNm** | 36,8 | 34,5 | 31,6 | 28,5 | 35,9 | 33,6 | 44,0 | 40,1 |
| **S' max-S' min** | **dNm** | 35,0 | 32,8 | 30,1 | 27,1 | 33,7 | 31,4 | 42,0 | 37,4 |
| **T95** | **s** | 425 | 428 | 416 | 417 | 380 | 397 | 343 | 388 |

Die erfindungsgemäßen vulkanisierbaren Zusammensetzungen weisen vergleichbare Vulkanisationsparameter auf wie die Vergleichsversuche.

Die Vulkanisation erfolgte in der Presse bei 180 °C. Nach der Vulkanisation wurde für 4 Stunden bei 150 °C getempert.

**Tabelle 3: Mechanische Eigenschaften der Vulkanisate**

| | | **1** | **2** | **3** | **4*** | **5*** | **6*** | **7** | **8*** |
|---|---|---|---|---|---|---|---|---|---|
| **Härte** | **ShA** | 82 | 80 | 77 | 73 | 79 | 79 | 86 | 81 |
| **E@B** | **%** | 249 | 291 | 330 | 390 | 380 | 409 | 156 | 381 |
| **TS** | **MPa** | 15,2 | 14,7 | 13,7 | 13,1 | 14,4 | 14,6 | 19,4 | 15,0 |
| **M100** | **MPa** | 9,8 | 8,5 | 7,3 | 6,1 | 6,6 | 6,3 | 15,0 | 6,9 |

**Tabelle 4: Eigenschaften der Vulkanisate nach Alterung in der oben erwähnten Säuremischung I für 70 Stunden bei 120 °C**

| | | **1** | **2** | **3** | **4*** | **5*** | **6*** | **7** | **8*** |
|---|---|---|---|---|---|---|---|---|---|
| **Massen Zunahme** | % | 13,1 | 11,8 | 12,0 | 12,9 | 3,6 | 4,1 | 24,7 | 4,0 |
| **Volumen Zunahme** | % | 19 | 18 | 18 | 19 | 7 | 7 | 35 | 7 |
| **Härte** | **ShA** | 58 | 55 | 53 | 50 | 65 | 65 | 69 | 70 |
| **delta H** | | -24 | -25 | -24 | -23 | -14 | -14 | -17 | -11 |
| **E@B** | % | 273 | 303 | 365 | 382 | 442 | 441 | 192 | 437 |
| **TS** | **MPa** | 14,0 | 12,8 | 13,8 | 10,4 | 13,6 | 11,9 | 14,9 | 13,8 |
| **M100** | **MPa** | 3,1 | 2,4 | 1,9 | 1,3 | 2,1 | 1,9 | 11,0 | 2,4 |
| **E@B Veränderung** | % | 10 | 4 | 11 | -2 | 16 | 8 | 23 | 15 |
| **TS Veränderung** | % | -8 | -13 | 1 | -21 | -6 | -18 | -23 | -8 |
| **M100 Veränderung** | % | -68 | -72 | -74 | -79 | -68 | -70 | -27 | -65 |

Die erfindungsgemäßen Vulkanisate 4*, 5* 6* und 8* weisen mit Werten von 382 bis 441 % eine höhere absolute Bruchdehnung (E@B) auf, als die Vergleichsvulkanisate 1-3 und 7 mit Werten von nur 192 bis 365%. Zusätzlich weisen die erfindungsgemäßen Vulkanisate 5*, 6* und 8* nach Lagerung in der Säuremischung eine deutlich verringerte Volumenquellung von nur 7% auf verglichen mit den nicht erfindungsgemäßen Vulkanisaten 1-3 und 7.

**Tabelle 5: Eigenschaften der Vulkanisate nach Alterung in Säuremischung II für 72 Stunden bei 120 °C**

| | | **1** | **2** | **3** | **4*** | **5*** | **6*** | **7** | **8*** |
|---|---|---|---|---|---|---|---|---|---|
| **Massen Zunahme** | % | 11,2 | 11,1 | 12,0 | 8,9 | 2,4 | 2,8 | 37,4 | 3,3 |
| **Volumen Zunahme** | % | 18 | 18 | 19 | 14 | 7 | 7 | 53 | 8 |
| **Härte** | **ShA** | 60 | 58 | 55 | 54 | 71 | 71 | 65 | 72 |
| **delta H** | | -22 | -22 | -23 | -20 | -9 | -8 | -20 | -9 |
| **E@B** | % | 288 | 330 | 340 | 378 | 439 | 440 | 180 | 429 |
| **TS** | **MPa** | 15,2 | 15,1 | 12,8 | 11,5 | 14,1 | 13,6 | 15,4 | 14,8 |
| **M100** | **MPa** | 3,6 | 2,7 | 2,2 | 1,7 | 2,6 | 2,4 | 11,6 | 2,9 |
| **E@B Veränderung** | % | 16 | 13 | 3 | -3 | 16 | 8 | 15 | 13 |
| **TS Veränderung** | % | 0 | 3 | -7 | -12 | -2 | -7 | -21 | -1 |
| **M100 Veränderung** | % | -63 | -68 | -70 | -72 | -61 | -62 | -23 | -58 |

Die Versuchsserie zeigt, dass erfindungsgemäße Vulkanisate nach Lagerung in Säuremischung II eine **geringe Volumenzunahme** und eine **höhere Bruchdehnung** aufweisen als Vulkanisate mit silanisierten mineralischen Füllstoffen oder hohen Anteilen an Ruß.

**Tabelle 6: Vulkanisierbare Zusammensetzungen**

| | **9** |
|---|---|
| **(a) Therban^{®} 3907** | 80 |
| **(a) Therban^{®} AT 3904 VP** | 20 |
| **(b) ZnO aktiv** | 2 |
| **(b) Maglite^{®} DE** | 2 |
| **(c) N772** | 65 |
| **(d) Perkadox^{®} 14-40** | 7,5 |
| **TOTM** | 5 |
| **Edenor^{®} C18** | 0,5 |
| **Rhenofit^{®} DDA** | 1,2 |
| **Vulkanox^{®} ZMB2/C5** | 0,4 |
| **TAIC 70%** | 1,5 |

| | |
|---|---|
| Alle Mengenangaben in Tabelle 1 in Gew.-Teilen. | |

Die Vergleichszusammensetzung 9 enthält große Mengen an Ruß von 20 oder mehr phr sowie geringe Mengen von nur 4 phr an nicht silanisiertem mineralischen Füllstoff.

Die Vulkanisation erfolgte in der Presse bei 180 °C. Nach der Vulkanisation wurde für 4 Stunden bei 150 °C getempert.

**Tabelle 7: Eigenschaften des Vulkanisates nach Alterung in der oben erwähnten Säuremischung I für 70 Stunden bei 120 °C**

| | | **9** |
|---|---|---|
| **Massen Zunahme** | % | 67,6 |
| **Volumen Zunahme** | % | 81,8 |
| **Härte** | **ShA** | 59 |
| **delta H** | | -11 |
| **E@B** | % | 101 |
| **TS** | **MPa** | 10,8 |
| **E@B Veränderung** | % | -63 |
| **TS Veränderung** | % | -57 |

Das Vergleichsvulkanisat 9 mit hoher Menge an Ruß und geringer Menge an nicht silanisiertem mineralischen Füllstoff weist eine viel zu hohe Volumenzunahme von 81,8 % und eine viel zu niedrige Bruchdehnung von nur 101% auf.

## Patentansprüche

1. Verwendung einer **vulkanisierbaren Zusammensetzung** zur Herstellung eines Vulkanisats, das mit Blow-By-Gas, AGR-Gas oder Motoröl, enthaltend Blow-By-Gas-Bestandteile in Kontakt steht, **dadurch gekennzeichnet, dass** die vulkanisierbare Zusammensetzung
(a) 100 Gew.-Teile mindestens eines hydrierten Nitrilkautschuks, welcher einen **Gehalt an Restdoppelbindungen (RDB)** von 10 % oder weniger aufweist,
(b) 40 bis 200 Gew.-Teile, bevorzugt 50 bis 150 Gew.-Teile, besonders bevorzugt 70 bis 120 Gew.-Teile mindestens eines nicht silanisierten mineralischen Füllstoffs,
(c) 0 bis weniger als 20 Gew.-Teile Ruß, bevorzugt 0 bis weniger als 10 Gew.-Teile Ruß, besonders bevorzugt 0 bis 5 Gew.-Teile Ruß und
(d) 0,5 bis 20 Gew.-Teile mindestens einer Peroxidverbindung enthält.

2. Verwendung nach Anspruch 1, **dadurch gekennzeichnet, dass** der hydrierte Nitrilkautschuk (a) einen **Gehalt an Restdoppelbindungen (RDB)** von 7 % oder weniger, bevorzugt von 0,9 % oder weniger aufweist.

3. Verwendung nach Anspruch 1 oder 2, **dadurch gekennzeichnet, dass** der **Gehalt an Acrylnitrilwiederholungseinheiten** im hydrierten Nitrilkautschuk (a) 10 bis 50 Gew.-%, bevorzugt 17 bis 43 Gew.-% und besonders bevorzugt 20 bis 36 Gew.-% bezogen auf die Gesamtmenge an hydriertem Nitrilkautschuk (a) beträgt.

4. Verwendung nach einem der Ansprüche 1 bis 3, **dadurch gekennzeichnet, dass** der hydrierte Nitrilkautschuk (a) neben Wiederholungseinheiten mindestens eines ungesättigten Nitrils und mindestens eines konjugierten Diens ein oder mehrere **weitere einpolymerisierbare Monomere** in Form von Carbonsäuren oder Carbonsäureester enthalten, bevorzugt Acrylsäure, Methacrylsäure, Itaconsäure, Fumarsäure, Maleinsäure, Crotonsäure, Methylacrylat, Ethylacrylat, Butylacrylat, 2-Ethylhexylacrylat, Octylacrylat, C₁-C₈-Alkoxy-PEG-(Meth)acrylat mit 1 bis 8 Ethylenglycol-Wiederholungseinheiten, Methoxyethylacrylat oder Ethoxyethylacrylat sowie deren Mischungen.

5. Verwendung nach einem der Ansprüche 1 bis 4, **dadurch gekennzeichnet, dass** der **nicht silanisierter Füllstoff (b) nicht silanisierter, mineralischer silikatischer oder oxidischer Füllstoff** ist.

6. Verwendung nach einem der Ansprüche 1 bis 5, **dadurch gekennzeichnet, dass** der **nicht silanisierter Füllstoff (b)** gefällte Kieselsäure, pyrogene Kieselsäure, Kaolin, kalzinierter Kaolin, Diatomeenerde, Neuburger Kieselerde, kalzinierte Neuburger Kieselerde, Feldspat oder Aluminiumoxid ist.

7. Verwendung nach einem der Ansprüche 1 bis 6, **dadurch gekennzeichnet, dass** der **nicht silanisierter Füllstoff (b) nicht silanisiertes kalziniertes Kaolin** mit einer spezifischen Oberfläche (N₂-Oberfläche) gemessen nach DIN-ISO 9277 kleiner 10 m²/g enthaltend mindestens 40 Gew.-% Silikat (SiO₂) und mindestens 10 Gew.-% Aluminiumoxid (Al₂O₃) bezogen auf die Gesamtmenge an Komponente (b) oder ein **Gemisch aus amorpher und kryptokristalliner Kieselsäure und lamellaren Kaolinit** mit einer BET-Oberfläche gemessen nach DIN-ISO 9277 von 8 m²/g, einen Gehalt an SiO₂ von 86 Gew.-%, einen Gehalt an Al₂O₃ von 13 Gew.-% bezogen auf die Gesamtmenge an nicht silanisiertem Füllstoff (b) und einen pH-Wert von 6,5 ist.

8. Verwendung nach einem der Ansprüche 1 bis 7, **dadurch gekennzeichnet, dass** die **Peroxidverbindung (d)** Dicumylperoxid, tert-Butylcumylperoxid, Bis(tert-butylperoxyisopropyl)benzol, Di-tert-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, tert-Butylperbenzoat, 4,4-Di(tert-butylperoxy)valeriansäurebutylester oder 1,1-Bis(tert-butylperoxy)-3,3,5-trimethyl-cyclohexan ist.

9. Verwendung nach einem der Ansprüche 1 bis 8, **dadurch gekennzeichnet, dass** die vulkanisierbare Zusammensetzung zusätzlich als Komponente (e) 0 bis 15 Gew.-Teile, bevorzugt 1 bis 10 Gew.-Teile, besonders bevorzugt 2 bis 7 Gew.-Teile **basisches Silikat** mit einem **pH-Wert von mehr als 7,** bevorzugt mit einem pH-Wert von mehr als 8, besonders bevorzugt mit einem pH-Wert von mehr als 8 bis 12, und ganz besonders bevorzugt mit einem pH-Wert von 10,5 bis 12, gemessen in einer 5 Gew.-%igen wässrigen Lösung nach DIN ISO 787/9 enthält.

10. Verwendung nach einem der Ansprüche 1 bis 8, **dadurch gekennzeichnet, dass** die vulkanisierbare Zusammensetzung zusätzlich als **Komponente (e)** 0 bis 15 Gew.-Teile, bevorzugt 1 bis 10 Gew.-Teile, besonders bevorzugt 2 bis 7 Gew.-Teile **basisches Silikat aus der Gruppe** bestehend aus Natriumaluminiumsilikat und Natriumorthosilikat (Na₄SiO₄), Natriummetasilikat (Na₂SiO₃), Dinatriumdisilikat (Na₂Si₂O₅), Dinatriumtrisilikat (Na₂Si₃O₇), bevorzugt Natriumaluminiumsilikat enthält.

11. Verwendung nach einem der Ansprüche 1 bis 10, **dadurch gekennzeichnet, dass** die vulkanisierbare Zusammensetzung
(a) 100 Gew.-Teile mindestens eines hydrierten Nitrilkautschuks, welcher einen **Gehalt an Restdoppelbindungen (RDB)** von 10 % oder weniger aufweist,
(b) 40 bis 200 Gew.-Teile, bevorzugt 50 bis 150 Gew.-Teile, besonders bevorzugt 70 bis 120 Gew.-Teile mindestens eines nicht silanisierten, mineralischen **silikatischen oder oxidischen** Füllstoffs,
(c) 0 bis weniger als 20 Gew.-Teile Ruß, bevorzugt 0 bis 10 Gew.-Teile Ruß, besonders bevorzugt 0 bis 5 Gew.-Teile Ruß,
(d) 0,5 bis 20 Gew.-Teile, bevorzugt 2 bis 10 Gew.-Teile mindestens einer Peroxidverbindung und
(e) 0 bis 15 Gew.-Teile, bevorzugt 1 bis 10 Gew.-Teile, besonders bevorzugt 2 bis 7 Gew.-Teile basisches Silikat mit einem pH-Wert in Wasser (5 Gew.-% in Wasser) gemessen nach DIN ISO 787/9 größer 7 enthält.

12. Verwendung nach einem der Ansprüche 1 bis 11, enthaltend
(a) 100 Gew.-Teile mindestens eines **hydrierten Nitrilkautschuks,** welcher einen **Gehalt an Restdoppelbindungen (RDB)** von 10 % oder weniger aufweist,
(b) 40 bis 200 Gew.-Teile mindestens eines **kalzinierten Kaolins** enthaltend 50 bis 60 Gew.-%, bevorzugt 55 Gew.-% SiO₂ und 35 bis 45 Gew.-%, bevorzugt 41 Gew.-% Al₂O₃ bezogen auf die Gesamtmenge an Komponente (b) mit einem pH Wert in Wasser (5 Gew.-% in Wasser) gemessen nach DIN ISO 787/9 von 6,5±0,5 und einer Oberfläche (BET) gemessen nach ISO 9277 von 8,5 m²/g oder eines **Gemisches** aus amorpher und kryptokristalliner Kieselsäure und lamellaren Kaolinit mit einer BET-Oberfläche von 8 m²/g, einen Gehalt an SiO₂ von 86 Gew.-%, einen Gehalt an Al₂O₃ von 13 Gew.-% bezogen auf die Gesamtmenge an Komponente (b) und einen pH-Wert von 6,5,
(c) 0 bis 5 Gew.-Teile Ruß,
(d) 1 bis 10 Gew.-Teile mindestens einer **Peroxidverbindung,** bevorzugt Dicumylperoxid, tert-Butylcumylperoxid, Bis(tert-butylperoxyisopropyl)benzol, Di-tert-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, tert-Butylperbenzoat, 4,4-Di(tert-butylperoxy)valeriansäurebutylester oder 1,1-Bis(tert-butylperoxy)-3,3,5-trimethylcyclohexan,
(e) 1 bis 10 Gew.-Teile mindestens eines **Natriumaluminiumsilikats** mit einem pH-Wert in Wasser (5 Gew.-% in Wasser) gemessen nach DIN ISO 787/9 von 11,3±0,7, einem Gehalt an flüchtigen Bestandteilen gemessen nach DIN ISO 787/2 von 5,5±1,5 und einer Oberfläche (BET) gemessen nach ISO 9277 von 65±15 und,
(f) 1 bis 100 Gew.-Teile mindestens eines üblichen **Kautschukadditivs.**

13. **Verwendung der Vulkanisats,** hergestellt aus einer vulkanisierbaren Zusammensetzung wie in den Ansprüchen 1 bis 12 definiert, zur Herstellung eines **Bauteils, dadurch gekennzeichnet, dass** zumindest das Vulkanisat in Kontakt mit Blow-By-Gas, AGR-Gas oder Motoröl, enthaltend Blow-By-Gas-Bestandteile, steht.

14. **Verwendung** nach Anspruch 13, **dadurch gekennzeichnet, dass** das Bauteil, das in Kontakt mit Blow-By-Gas, AGR-Gas oder Motoröl, enthaltend Blow-By-Gas-Bestandteilen, steht, eine **Dichtung,** ein Riemen, ein Schlauch oder ein Kabel, bevorzugt eine Dichtung, ein Riemen oder ein Schlauch ist.

15. **Vulkanisierbare Zusammensetzung,** enthaltend
(a) 100 Gew.-Teile mindestens eines hydrierten Nitrilkautschuks, welcher einen **Gehalt an Restdoppelbindungen (RDB)** von 10 % oder weniger aufweist,
(b) 40 bis 200 Gew.-Teile, bevorzugt 50 bis 150 Gew.-Teile, besonders bevorzugt 70 bis 120 Gew.-Teile mindestens eines nicht silanisierten mineralischen Füllstoffs,
(c) 0 bis weniger als 20 Gew.-Teile Ruß, bevorzugt 0 bis weniger als 10 Gew.-Teile Ruß, besonders bevorzugt 0 bis 5 Gew.-Teile Ruß,
(d) 0,5 bis 20 Gew.-Teile mindestens einer Peroxidverbindung und
(e) 0 bis 15 Gew.-Teile mindestens eines basischen Silikats, bevorzugt Natriumaluminiumsilikats.

## Claims

1. Use of a **vulcanizable composition** for production of a vulcanizate in contact with blow-by gas, EGR gas or motor oil comprising blow-by gas constituents, **characterized in that** the vulcanizable composition comprises
(a) 100 parts by weight of at least one hydrogenated nitrile rubber having a **content of residual double bonds (RDB)** of 10% or less,
(b) 40 to 200 parts by weight, preferably 50 to 150 parts by weight, more preferably 70 to 120 parts by weight, of at least one unsilanized mineral filler,
(c) 0 to less than 20 parts by weight of carbon black, preferably 0 to less than 10 parts by weight of carbon black, more preferably 0 to 5 parts by weight of carbon black, and
(d) 0.5 to 20 parts by weight of at least one peroxide compound.

2. Use according to Claim 1, **characterized in that** the hydrogenated nitrile rubber (a) has a **content of residual double bonds (RDB)** of 7% or less, preferably of 0.9% or less.

3. Use according to Claim 1 or 2, **characterized in that** the **content of repeat acrylonitrile units** in the hydrogenated nitrile rubber (a) is 10 to 50 wt%, preferably 17 to 43 wt% and more preferably 20 to 36 wt%, based on the total amount of hydrogenated nitrile rubber (a).

4. Use according to any of Claims 1 to 3, **characterized in that** the hydrogenated nitrile rubber (a), as well as repeat units of at least one unsaturated nitrile and of at least one conjugated diene, contains one or more **further copolymerizable monomers** in the form of carboxylic acids or carboxylic esters, preferably acrylic acid, methacrylic acid, itaconic acid, fumaric acid, maleic acid, crotonic acid, methyl acrylate, ethyl acrylate, butyl acrylate, 2-ethylhexyl acrylate, octyl acrylate, C₁-C₈-alkoxy-PEG (meth)acrylate having 1 to 8 repeat ethylene glycol units, methoxyethyl acrylate or ethoxyethyl acrylate, and mixtures thereof.

5. Use according to any of Claims 1 to 4, **characterized in that** the **unsilanized filler (b)** is **unsilanized mineral silicatic or oxidic filler.**

6. Use according to any of Claims 1 to 5, **characterized in that** the **unsilanized filler (b)** is precipitated silica, fumed silica, kaolin, calcined kaolin, diatomaceous earth, Neuburg siliceous earth, calcined Neuburg siliceous earth, feldspar or alumina.

7. Use according to any of Claims 1 to 6, **characterized in that** the **unsilanized filler (b)** is **unsilanized calcined kaolin** having a specific surface area (N₂ surface area) measured according to DIN ISO 9277 of less than 10 m²/g, containing at least 40 wt% of silicate (SiO₂) and at least 10 wt% of alumina (Al₂O₃), based on the total amount of component (b), or a **mixture of amorphous and cryptocrystalline silica and lamellar kaolinite** having a BET surface area measured according to DIN ISO 9277 of 8 m²/g, an SiO₂ content of 86 wt%, an Al₂O₃ content of 13 wt%, based on the total amount of unsilanized filler (b), and a pH of 6.5.

8. Use according to any of Claims 1 to 7, **characterized in that** the **peroxide compound (d)** is dicumyl peroxide, tert-butyl cumyl peroxide, bis(tert-butylperoxyisopropyl)benzene, di-tert-butyl peroxide, 2,5-dimethylhexane 2,5-dihydroperoxide, 2,5-dimethylhex-3-yne 2,5-dihydroperoxide, dibenzoyl peroxide, bis(2,4-dichlorobenzoyl) peroxide, tert-butyl perbenzoate, butyl 4,4-di(tert-butylperoxy)valerate or 1,1-bis(tert-butylperoxy)-3,3,5-trimethylcyclohexane.

9. Use according to any of Claims 1 to 8, **characterized in that** the vulcanizable composition additionally comprises, as component (e), 0 to 15 parts by weight, preferably 1 to 10 parts by weight, more preferably 2 to 7 parts by weight, of **basic silicate** having a **pH of more than 7,** preferably having a pH of more than 8, more preferably having a pH of more than 8 to 12, and most preferably having a pH of 10.5 to 12, measured in a 5 wt% aqueous solution according to DIN ISO 787/9.

10. Use according to any of Claims 1 to 8, **characterized in that** the vulcanizable composition additionally comprises, as **component (e),** 0 to 15 parts by weight, preferably 1 to 10 parts by weight, more preferably 2 to 7 parts by weight, of **basic silicate from the group** consisting of sodium aluminium silicate and sodium orthosilicate (Na₄SiO₄), sodium metasilicate (Na₂SiO₃), disodium disilicate (Na₂Si₂O₅), disodium trisilicate (Na₂Si₃O₇), preferably sodium aluminium silicate.

11. Use according to any of Claims 1 to 10, **characterized in that** the vulcanizable composition contains
(a) 100 parts by weight of at least one hydrogenated nitrile rubber having a **content of residual double bonds (RDB)** of 10% or less,
(b) 40 to 200 parts by weight, preferably 50 to 150 parts by weight, more preferably 70 to 120 parts by weight, of at least one unsilanized mineral **silicatic or oxidic** filler,
(c) 0 to less than 20 parts by weight of carbon black, preferably 0 to 10 parts by weight of carbon black, more preferably 0 to 5 parts by weight of carbon black,
(d) 0.5 to 20 parts by weight, preferably 2 to 10 parts by weight, of at least one peroxide compound, and
(e) 0 to 15 parts by weight, preferably 1 to 10 parts by weight, more preferably 2 to 7 parts by weight, of basic silicate having a pH in water (5 wt% in water) measured according to DIN ISO 787/9 of greater than 7.

12. Use according to any of Claims 1 to 11, comprising
(a) 100 parts by weight of at least one **hydrogenated nitrile rubber** having a **content of residual double bonds (RDB)** of 10% or less,
(b) 40 to 200 parts by weight of at least one **calcined kaolin** containing 50 to 60 wt%, preferably 55 wt%, of SiO₂ and 35 to 45 wt%, preferably 41 wt%, of Al₂O₃, based on the total amount of component (b), having a pH in water (5 wt% in water) measured according to DIN ISO 787/9 of 6.5 ± 0.5 and a surface area (BET) measured according to ISO 9277 of 8.5 m²/g, or of a **mixture** of amorphous and cryptocrystalline silica and lamellar kaolinite having a BET surface area of 8 m²/g, an SiO₂ content of 86 wt%, an Al₂O₃ content of 13 wt%, based on the total amount of component (b), and a pH of 6.5,
(c) 0 to 5 parts by weight of carbon black,
(d) 1 to 10 parts by weight of at least one **peroxide compound,** preferably dicumyl peroxide, tert-butyl cumyl peroxide, bis(tert-butylperoxyisopropyl)benzene, di-tert-butyl peroxide, 2,5-dimethylhexane 2,5-dihydroperoxide, 2,5-dimethylhex-3-yne 2,5-dihydroperoxide, dibenzoyl peroxide, bis(2,4-dichlorobenzoyl) peroxide, tert-butyl perbenzoate, butyl 4,4-di(tert-butylperoxy)valerate or 1,1-bis(tert-butylperoxy)-3,3,5-trimethylcyclohexane,
(e) 1 to 10 parts by weight of at least one **sodium aluminium silicate** having a pH in water (5 wt% in water) measured according to DIN ISO 787/9 of 11.3 ± 0.7, a content of volatile constituents measured according to DIN ISO 787/2 of 5.5 ± 1.5 and a surface area (BET) measured according to ISO 9277 of 65 ± 15, and
(f) 1 to 100 parts by weight of at least one customary **rubber additive.**

13. **Use of the vulcanizate** produced from a vulcanizable composition as defined in Claims 1 to 12 for production of a **component, characterized in that** at least the vulcanizate is in contact with blow-by gas, EGR gas or motor oil comprising blow-by gas constituents.

14. Use according to Claim 13, **characterized in that** the component in contact with blow-by gas, EGR gas or motor oil comprising blow-by gas constituents is a **gasket,** a belt, a hose or a cable, preferably a gasket, a belt or a hose.

15. **Vulcanizable composition** comprising
(a) 100 parts by weight of at least one hydrogenated nitrile rubber having a **content of residual double bonds (RDB)** of 10% or less,
(b) 40 to 200 parts by weight, preferably 50 to 150 parts by weight, more preferably 70 to 120 parts by weight, of at least one unsilanized mineral filler,
(c) 0 to less than 20 parts by weight of carbon black, preferably 0 to less than 10 parts by weight of carbon black, more preferably 0 to 5 parts by weight of carbon black,
(d) 0.5 to 20 parts by weight of at least one peroxide compound, and
(e) 0 to 15 parts by weight of at least one basic silicate, preferably sodium aluminium silicate.

## Revendications

1. Utilisation d'une **composition vulcanisable** pour la préparation d'un vulcanisat, qui est en contact avec du gaz de soufflage, du gaz de réacteur avancé refroidi au gaz ou de l'huile de moteur, contenant des composants de gaz de soufflage, **caractérisée en ce que** la composition vulcanisable contient
(a) 100 parties en poids d'au moins un caoutchouc de nitrile hydrogéné qui présente une **teneur en doubles liaisons résiduelles (RDB)** de 10 % ou moins,
(b) 40 à 200 parties en poids, préférablement 50 à 150 parties en poids, particulièrement préférablement 70 à 120 parties en poids d'au moins une charge minérale non silanisée,
(c) 0 à moins de 20 parties en poids de suie, préférablement 0 à moins de 10 parties en poids de suie, particulièrement préférablement 0 à 5 parties en poids de suie et
(d) 0,5 à 20 parties en poids d'au moins un composé de type peroxyde.

2. Utilisation selon la revendication 1, **caractérisée en ce que** le caoutchouc de nitrile hydrogéné (a) présente une **teneur en doubles liaisons résiduelles (RDB)** de 7 % ou moins, préférablement de 0,9 % ou moins.

3. Utilisation selon la revendication 1 ou 2, **caractérisée en ce que** la **teneur en motifs répétitifs acrylonitrile** dans le caoutchouc de nitrile hydrogéné (a) est de 10 à 50 % en poids, préférablement de 17 à 43 % en poids et particulièrement préférablement de 20 à 36 % en poids par rapport à la quantité totale de caoutchouc de nitrile hydrogéné (a).

4. Utilisation selon l'une quelconque des revendications 1 à 3, **caractérisée en ce que** le caoutchouc de nitrile hydrogéné (a) contient, outre des motifs répétitifs d'au moins un nitrile insaturé et d'au moins un diène conjugué, un ou plusieurs **monomères polymérisables supplémentaires** sous forme d'acides carboxyliques ou d'esters d'acides carboxyliques, préférablement l'acide acrylique, l'acide méthacrylique, l'acide itaconique, l'acide fumarique, l'acide maléique, l'acide crotonique, l'acrylate de méthyle, l'acrylate d'éthyle, l'acrylate de butyle, l'acrylate de 2-éthylhexyle, l'acrylate d'octyle, un (méth)acrylate de C₁₋₈-alcoxy-PEG comportant 1 à 8 motifs répétitifs d'éthylène glycol, l'acrylate de méthoxyéthyle ou l'acrylate d'éthoxyéthyle ainsi que leurs mélanges.

5. Utilisation selon l'une quelconque des revendications 1 à 4, **caractérisée en ce que** la **charge non silanisée (b) est une charge siliceuse ou oxydique, minérale, non silanisée.**

6. Utilisation selon l'une quelconque des revendications 1 à 5, **caractérisée en ce que** la **charge non silanisée (b)** est de l'acide silicique précipité, de l'acide silicique pyrogéné, du kaolin, du kaolin calciné, de la terre à diatomées, de la silice de Neubourg, de la silice de Neubourg calcinée, du feldspath ou de l'oxyde d'aluminium.

7. Utilisation selon l'une quelconque des revendications 1 à 6, **caractérisée en ce que** la **charge non silanisée (b) est du kaolin calciné non silanisé** doté d'une surface spécifique (surface N₂) mesurée selon la norme DIN-ISO 9277 inférieure à 10 m²/g contenant au moins 40 % en poids de silicate (SiO₂) et au moins 10 % en poids d'oxyde d'aluminium (Al₂O₃) par rapport à la quantité totale du composant (b) ou est un **mélange d'acide silicique amorphe et cryptocristallin et de kaolinite lamellaire** comportant une surface BET mesurée selon la norme DIN-ISO 9277 de 8 m²/g, une teneur en SiO₂ de 86 % en poids, une teneur en Al₂O₃ de 13 % en poids par rapport à la quantité totale de charge non silanisée (b) et une valeur de pH de 6,5.

8. Utilisation selon l'une quelconque des revendications 1 à 7, **caractérisée en ce que** le **composé de type peroxyde (d)** est le peroxyde de dicumyle, le peroxyde de tert-butylcumyle, le bis(tert-butylperoxyisopropyl)benzène, le peroxyde de di-tert-butyle, le 2,5-diméthylhexane-2,5-dihydroperoxyde, le 2,5-diméthylhexyne-3,2,5-dihydroperoxyde, le peroxyde de dibenzoyle, le peroxyde de bis-(2,4-dichlorobenzoyle), le perbenzoate de tert-butyle, l'ester butylique de l'acide 4,4-di(tert-butylperoxy)valérianique ou le 1,1-bis(tert-butylperoxy)-3,3,5-triméthylcyclohexane.

9. Utilisation selon l'une quelconque des revendications 1 à 8, **caractérisée en ce que** la composition vulcanisable contient de plus, en tant que composant (e), 0 à 15 parties en poids, préférablement 1 à 10 parties en poids, particulièrement préférablement 2 à 7 parties en poids d'un **silicate alcalin** doté d'une **valeur de pH supérieure à 7,** préférablement doté d'une valeur de pH supérieure à 8, particulièrement préférablement doté d'une valeur de pH de plus de 8 jusqu'à 12, et tout particulièrement préférablement doté d'une valeur de pH de 10,5 à 12, mesurée dans une solution aqueuse à 5 % en poids selon la norme DIN ISO 787/9.

10. Utilisation selon l'une quelconque des revendications 1 à 8, **caractérisée en ce que** la composition vulcanisable contient de plus, en tant que **composant (e),** 0 à 15 parties en poids, préférablement 1 à 10 parties en poids, particulièrement préférablement 2 à 7 parties en poids d'un **silicate alcalin choisi dans le groupe** constitué par le silicate de sodium-aluminium et l'orthosilicate de sodium (Na₄SiO₄), le métasilicate de sodium (Na₂SiO₃), le disilicate disodique (Na₂Si₂O₅), le trisilicate disodique (Na₂Si₃O₇), préférablement le silicate de sodium-aluminium.

11. Utilisation selon l'une quelconque des revendications 1 à 10, **caractérisée en ce que** la composition vulcanisable contient
(a) 100 parties en poids d'au moins un caoutchouc de nitrile hydrogéné, qui présente une **teneur en doubles liaisons résiduelles (RDB)** de 10 % ou moins,
(b) 40 à 200 parties en poids, préférablement 50 à 150 parties en poids, particulièrement préférablement 70 à 120 parties en poids d'au moins une charge **siliceuse ou oxydique,** minérale, non silanisée,
(c) 0 à moins de 20 parties en poids de suie, préférablement 0 à 10 parties en poids de suie, particulièrement préférablement 0 à 5 parties en poids de suie,
(d) 0,5 à 20 parties en poids, préférablement 2 à 10 parties en poids d'au moins un composé de type peroxyde et
(e) 0 à 15 parties en poids, préférablement 1 à 10 parties en poids, particulièrement préférablement 2 à 7 parties en poids d'un silicate alcalin doté d'une valeur de pH, dans l'eau (5 % en poids dans l'eau), supérieure à 7, mesurée selon la norme DIN ISO 787/9.

12. Utilisation selon l'une quelconque des revendication 1 à 11, contenant
(a) 100 parties en poids d'au moins un **caoutchouc de nitrile hydrogéné,** qui présente une **teneur en doubles liaisons résiduelles (RDB)** de 10 % ou moins,
(b) 40 à 200 parties en poids d'au moins un **kaolin calciné** contenant 50 à 60 % en poids, préférablement 55 % en poids de SiO₂ et 35 à 45 % en poids, préférablement 41 % en poids d'Al₂O₃ par rapport à la quantité totale de composant (b) comportant une valeur de pH dans l'eau (5 % en poids dans l'eau) mesurée selon la norme DIN ISO 787/9 de 6,5 ± 0,5 et une surface (BET) mesurée selon la norme ISO 9277 de 8,5 m²/g ou d'un **mélange** d'acide silicique amorphe et cryptocristallin et de kaolinite lamellaire comportant une surface BET de 8 m²/g, une teneur en SiO₂ de 86 % en poids, une teneur en Al₂O₃ de 13 % en poids par rapport à la quantité totale de composant (b) et une valeur de pH de 6,5,
(c) 0 à 5 parties en poids de suie,
(d) 1 à 10 parties en poids d'au moins un **composé de type peroxyde,** préférablement le peroxyde de dicumyle, le peroxyde de tert-butylcumyle, le bis(tert-butylperoxyisopropyl)benzène, le peroxyde de di-tert-butyle, le 2,5-diméthylhexane-2,5-dihydroperoxyde, le 2,5-diméthylhexyne-3,2,5-dihydroperoxyde, le peroxyde de dibenzoyle, le peroxyde de bis-(2,4-dichlorobenzoyle), le perbenzoate de tert-butyle, l'ester butylique de l'acide 4,4-di(tert-butylperoxy)valérianique ou le 1,1-bis(tert-butylperoxy)-3,3,5-triméthylcyclohexane,
(e) 1 à 10 parties en poids d'au moins un **silicate de sodium-aluminium** doté d'une valeur de pH dans l'eau (5 % en poids dans l'eau) mesurée selon la norme DIN ISO 787/9 de 11,3 ± 0,7, d'une teneur en composants volatiles mesurée selon la norme DIN ISO 787/2 de 5,5 ± 1,5 et d'une surface (BET) mesurée selon la norme ISO 9277 de 65 ± 15 et,
(f) 1 à 100 parties en poids d'au moins un **additif** habituel **pour caoutchouc.**

13. **Utilisation du vulcanisat** préparée à partir d'une composition vulcanisable telle que définie dans les revendications 1 à 12, pour la préparation d'une **pièce, caractérisée en ce qu'**au moins le vulcanisat est en contact avec du gaz de soufflage, du gaz de réacteur avancé refroidi au gaz ou de l'huile de moteur, contenant des composants de gaz de soufflage.

14. **Utilisation** selon la revendication 13, **caractérisée en ce que** la pièce qui est en contact avec du gaz de soufflage, du gaz de réacteur avancé refroidi au gaz ou de l'huile de moteur, contenant des composants de gaz de soufflage, est un **joint,** une courroie, un tube ou un câble, préférablement un joint, une courroie ou un tube.

15. **Composition vulcanisable,** contenant
(a) 100 parties en poids d'au moins un caoutchouc de nitrile hydrogéné qui présente une **teneur en doubles liaisons résiduelles (RDB)** de 10 % ou moins,
(b) 40 à 200 parties en poids, préférablement 50 à 150 parties en poids, particulièrement préférablement 70 à 120 parties en poids d'au moins une charge minérale non silanisée,
(c) 0 à moins de 20 parties en poids de suie, préférablement 0 à moins de 10 parties en poids de suie, particulièrement préférablement 0 à 5 parties en poids de suie,
(d) 0,5 à 20 parties en poids d'au moins un composé de type peroxyde et
(e) 0 à 15 parties en poids d'au moins un silicate alcalin, préférablement d'un silicate de sodium-aluminium.
